(19) Europäisches Patentamt / European Patent Office / Office européen des brevets

(11) **EP 2 759 700 B1**

(12) **EUROPEAN PATENT SPECIFICATION**

(45) Date of publication and mention
of the grant of the patent:
**30.03.2016 Bulletin 2016/13**

(21) Application number: **11869762.2**

(22) Date of filing: **30.11.2011**

(51) Int Cl.:
*F03D 80/00* (2016.01)     *F03D 7/02* (2006.01)
*F03D 9/00* (2016.01)     *F03D 15/00* (2016.01)
*F16H 39/02* (2006.01)

(86) International application number:
**PCT/JP2011/077625**

(87) International publication number:
**WO 2013/042279 (28.03.2013 Gazette 2013/13)**

(54) **RENEWABLE ENERGY-TYPE ELECTRIC POWER GENERATION DEVICE AND ROTOR AFFIXATION METHOD FOR SAME**

VORRICHTUNG ZUR STROMERZEUGUNG MITHILFE ERNEUERBARER ENERGIE UND ROTORBEFESTIGUNGSVERFAHREN DAFÜR

DISPOSITIF GÉNÉRATEUR D'ÉNERGIE ÉLECTRIQUE DU TYPE À ÉNERGIE RENOUVELABLE, ET PROCÉDÉ DE FIXATION DU ROTOR POUR CE DISPOSITIF

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.09.2011 PCT/JP2011/071676**
**22.09.2011 PCT/JP2011/071677**

(43) Date of publication of application:
**30.07.2014 Bulletin 2014/31**

(73) Proprietor: **Mitsubishi Heavy Industries, Ltd.**
**Tokyo 108-8215 (JP)**

(72) Inventor: **HAMANO, Fumio**
**Tokyo 108-8215 (JP)**

(74) Representative: **Intès, Didier Gérard André et al**
**Cabinet Beau de Loménie**
**158, rue de l'Université**
**75340 Paris Cedex 07 (FR)**

(56) References cited:
**EP-A2- 2 072 814      WO-A1-2011/096053**
**JP-A- 2004 218 436      JP-A- 2005 248 738**
**JP-A- 2007 051 584      US-A1- 2010 040 470**
**US-A1- 2010 040 470      US-B2- 7 397 145**

**Description**

[Technical Field]

The present invention relates to a power generating apparatus of renewable energy type for generating power by transmitting rotational energy of a rotor to a generator via a hydraulic pump and a hydraulic motor and also a rotor locking method. The power generating apparatus of renewable energy type generates power from renewable energy such as wind, tidal current, ocean current and river current and, for instance, includes a wind turbine generator, a tidal generator, an ocean current generator, a river current generator or the like.

[Background Art]

In recent years, from a perspective of preserving the environment, it is becoming popular to use a power generating apparatus of renewable energy type such as a wind turbine generator utilizing wind power and a renewable energy type turbine generator such as a tidal current generator utilizing tidal currents. In the power generating apparatus of the renewable energy type, motion energy of the wind, the tidal current, the ocean current or the river current is converted into the rotational energy of the rotor and the rotational energy of the rotor is converted into electric power by the generator.

In the power generating apparatus of the renewable energy type, the rotor is locked in some cases for safety reasons during replacement of the blade or maintenance of device components. When a helicopter for transporting operators accesses the power generating apparatus of the renewable energy type, the rotor is locked.

Normally in this case, in such a state that the rotor is stopped at a position where a first hole formed in the rotor matches a second hole formed in the nacelle, a locking pin is inserted in the first and second holes to immobilize the rotor in a rotational direction.

In the power generating apparatus of the renewable energy type, the rotor is decelerated and stopped normally by reducing the renewable energy received by the rotor through adjustment of a pitch angle of the blade (a pitch control). Further, the angle of rotation is adjusted using an actuator such as a hydraulic cylinder and an electric motor.

However, a change rate of the pitch angle using an existing pitch drive system is approximately 3 deg/sec to 5 deg/sec and not so excellent in responsiveness. Thus, it is difficult to stop the rotor at a desired angular position solely by the pitch control. This is due to the fact that the torque applied to the rotor from the renewable energy source is heavily influenced by change in a flow speed of the renewable energy and it is difficult to precisely adjust the position of the rotor solely by the pitch control which has low responsiveness.

There are techniques for decelerating or stopping the rotor using a braking force of a brake system.

For instance, proposed in Patent Literature 1 is to lock the rotor using the locking pin at the angular position after stopping the rotor at a desired position by applying a braking force by the brake system to the rotor. More specifically, according to Patent Literature 1, the brake system is formed by a brake disk and a brake shoe and the rotor is decelerated by the brake system. The angular position of the rotor is detected by a position sensor and once the rotor is at the desired angular position, the locking pin is inserted automatically.

Further, in Patent Literature 2, the rotor is decelerated by the pitch control and then based on detected angular position of the rotor, the braking force is applied to the rotor by the brake disk so as to stop the rotor at the desired angular position. More specifically, after the rotor is decelerated by the pitch control, once the rotor reaches a target angular position set just before the desired angular position, the brake system is activated to stop the rotor at the desired annular position. The target angular position, herein, indicates a position just before the desired angular position to stop the rotor and the desired angular position is set by taking into account the time that takes for the rotor to stop after activation of the brake system.

In recent years, development of a power generating apparatus of a renewably energy type using a hydraulic transmission with a combination of a hydraulic pump and a hydraulic motor instead of a gearbox which was an obstacle for weight and cost reduction is being developed (e.g. Patent Literature 3 and Patent Literature 4).

EP 2 072 814 discloses a method of positioning a wind turbine rotor comprising defining a predetermined angular position in a main rotation plane of the rotor and controlling a rate of deceleration of the rotor, such as to stop the rotor at the predetermined angular position.

[Citation List]

[Patent Literature]

EP 2 759 700 B1

[PTL 1]
US 7397145
[PTL 2]
US 2011/0187107 A
[PTL 3]
US 2010/0032959 A
[PTL 4]
US 2010/0040470 A

[Summary of Invention]

[Technical Problem]

In the method disclosed in Patent Literature 1, the rotor is stopped at the desired angular position using the brake system but it is difficult to precisely adjust intensity of the braking force applied to the rotor by the brake system and thus sometimes the rotor is stopped at a position off the desired angular position.

Similarly, in the method disclosed in Patent Literature 2, the rotor is decelerated by the pitch control and then ultimately stopped at the desired angular position using the brake system. Thus, sometimes the rotor is stopped at a position off the desired angular position.

Further, unlike a power generating apparatus of a renewable energy type equipped with a gearbox, the power generating apparatus of the renewable energy type equipped with the hydraulic transmission (e.g. those apparatuses described in Patent Literatures 3 and 4), there is a special reason that it is difficult to increase the braking force applied by the brake system.

More specifically, in the power generating apparatus of the renewable energy type equipped with the gearbox, the rotation of the rotor, a few to tens of revolutions per minute (rpm) is increased approximately a hundredfold by the gearbox and inputted to the generator. Thus, by arranging the brake system to the rotations shaft between the gearbox and the generator, approximately 1/100 of the braking force is needed compared to the case where the brake system is provided to the main shaft between the hub and the gearbox. In contrast, in the power generating apparatus of the renewable energy type equipped with the hydraulic transmission, the rotation shaft rotating at high speed (low torque) between the hydraulic motor and the generator is not connected to the main shaft between the hub and the hydraulic pump. Thus, the brake system is attached to the main shaft disposed between the hub and the hydraulic pump and thus it is difficult to increase the braking force applied by the brake system.

Therefore, in the case of the power generating apparatus of the renewable energy type equipped with the hydraulic transmission, it takes long to stop the rotor using the brake system.

Further, in the methods of Patent Literature 1 and Patent Literature 2, the rotor is decelerated and stopped using the pitch control and the brake system and thus energy is not utilized. More specifically, in the case of decelerating and stopping the rotor using the pitch control, the energy the rotor receives from the renewable energy source decreases. Further, in the case of decelerating and stopping the rotor using the brake system, the rotational energy of the rotor is converted into frictional heat and disperses in the air.

In view of the above issues, it is an object of the present invention to provide a power generating apparatus of a renewable energy type which is capable of stopping the rotor at a desired angular position promptly and also capable of utilizing energy when stopping the rotor, as well as a rotor locking method.

[Solution to Problem]

The present invention provides a rotor locking method for a power generating apparatus of a renewable energy type which comprises: a rotor including a hub to which a blade is mounted and a main shaft connected to the hub: a hydraulic pump configured to be driven by rotation of the rotor; a hydraulic motor configured to be driven by operating oil pressurized by the hydraulic pump: and a generator connected to the hydraulic motor. The method according to the present invention comprises steps of:

stopping the rotor by applying a braking force by at least the hydraulic pump to the rotor; and
after the step of stopping the rotor, locking the rotor so as to immobilize the rotor in a rotational direction,
wherein, in the step of stopping the rotor, torque of the hydraulic pump is changed so as to adjust the braking force.

In this rotor locking method, the torque of the hydraulic pump is changed so as to adjust the braking force applied to the rotor. Thus, it is possible to stop the rotor at any angular position promptly when needed. More specifically, unlike a braking force applied by a brake system, the braking force applied by the hydraulic pump 20 is finely adjustable by adjusting the displacement of the hydraulic pump or the pressure in the high pressure oil line between the hydraulic pump and the hydraulic motor. Thus the rotor can be stopped at any angular position. Further, by adjusting the torque of the hydraulic pump as needed, it is possible to apply relatively large braking force to the rotor so as to stop the rotor promptly.

Furthermore, in the case of applying the braking force by the brake system to the rotor, the rotational energy of the rotor disperses as friction heat. On the other hand, in the above case of applying the braking force by the hydraulic pump to the rotor, the rotational energy of the rotor is used to pressurize the operating oil. Further, the high pressure oil (the pressurized operating oil) from the hydraulic pump can be used to enhance electric power generated in the generator if needed. As a result, the energy can be utilized when stopping the rotor.

In the above rotor locking method, the power generating apparatus of the renewable energy type may further comprise an angular position detector for detecting an angular position of the rotor, and in the step of stopping the rotor, the torque of the hydraulic pump may be adjusted based on a detection result obtained by the angular position detector so as to stop the rotor at a target angular position.

As a result, the rotor can be automatically stopped at the target angular position by appropriately adjusting the torque of the hydraulic pump. Thus, the locking operation of the rotor can be performed efficiently.

In this case, the target angular position is a position where a first hole formed on a rotor side matches a second hole formed on a nacelle side for housing the main shaft, and in the step of locking the rotor, a locking pin may be inserted in the first hole on the rotor side and the second hole on the nacelle side.

As a result, after stopping the rotor at the target angular position (the position where the first hole formed on the rotor side matches the second hole formed on the nacelle side), the rotor can be immobilized in the rotational direction by inserting the locking pin in the first hole and the second hole.

In the above rotor locking method, a brake pad may be pressed against a brake disk attached to the rotor in the step of locking the rotor.

As a result, after stopping the rotor at an arbitrary angular position by changing the torque of the hydraulic pump, the rotor can be immobilized in the rotational direction using the brake disk and the brake pad.

The above rotor locking method may further comprise a step of rotating the rotor to a target angular position after the step of stopping the rotor and before the step of locking the rotor.

For instance, when a torque applied to the rotor from a renewable energy source is affected by flow speed change of the renewable energy and suddenly changes, it is difficult to stop the rotor at a desired angular position by adjusting the torque of the hydraulic pump. Moreover, after stopping the rotor at the desired angular position, the rotor may continue to move from some cause, causing misalignment from the target angular position afterward.

In view of this, as described above, the rotor is stopped and then rotated to the target angular position to securely lock the rotor at this target angular position.

In the case of temporarily stopping the rotor and then rotating the rotor to the target angular position, in the step of rotating the rotor, the hydraulic pump may be driven by pressurized oil supplied to the hydraulic pump so as to rotate the rotor to the target angular position.

By driving the hydraulic pump by supplying the pressurized oil (i.e. by causing the hydraulic pump to perform motoring operation), the rotor is rotated to the target angular position and is stopped at this target angular position. Moreover, the hydraulic pump is needed in the first place to transmit the rotational energy of the rotor to the generator and thus by making the hydraulic pump to perform the motoring operation, it is not necessary to provide a device specifically for rotating the rotor to the target angular position.

In the case of rotating the rotor to the target angular position by supplying the pressurized oil to the hydraulic pump, the power generating apparatus of the renewable energy type may further comprise an angular position detector for detecting an angular position of the rotor, and in the step of rotating the rotor, opening and closing of a valve provided in a supply path for supplying the pressurized oil to the hydraulic pump is controlled based on a detection result obtained by the angular position detector so as to rotate the rotor to the target angular position.

As a result, the operation of stopping the rotor at the target angular position through the motoring operation of the hydraulic pump can be automated. Thus, the locking operation of the rotor can be efficiently performed.

Alternatively, in the case of temporarily stopping the rotor and then rotating the rotor to the target angular position, in the step of rotating the rotor, in such a case that a wind speed is not less than a threshold value, the rotor is rotated to the target angular position by adjusting a pitch angle of the blade, and in such a case that the wind speed is less than the threshold value, the rotor is rotated to the target angular position by a geared motor.

If the geared motor is designed on the assumption of its use in a high wind speed area, the geared motor needs to be large scale to generate torque large enough to counteract a strong force of the wind. In view of this, when the wind speed exceeds the threshold value, the pitch control is used and when the wind speed is below the threshold value, the geared motor is used. As a result, it is possible to avoid size increase of the geared motor.

Particularly, by using the hydraulic transmission similarly to the above power generating apparatus of the renewable energy type, it is inevitable that the geared motor is attached to the main shaft disposed between the hub and the hydraulic pump and its size is increased to generate large torque. In view of this, by using both the pitch drive system and the geared motor as described above, it is extremely beneficial to avoid size increase of the geared motor.

Further, the geared motor indicates a motor with a reducer so as to increase the torque of the motor by the reducer and apply the increased torque to the rotor.

In the above rotor locking method according to claim 1, the power generating apparatus of the renewable energy type may further comprise a high pressure oil line for supplying the operating oil from the hydraulic pump to the hydraulic motor and a low pressure oil line for returning the operating oil from the hydraulic motor to the hydraulic pump. The hydraulic pump may comprise: a cylinder; a piston slideable in the cylinder in response to rotation of the rotor; a hydraulic chamber formed by the cylinder and the piston; a high pressure valve for opening and closing a communication path between the hydraulic chamber and the high pressure oil line; and a low pressure valve for opening and closing a communication path between the hydraulic chamber and the low pressure oil line. The rotor locking method further comprises a step of: after the step of stopping the rotor and before the step of locking the rotor, temporarily locking the rotor by maintaining such a state that the high pressure valve and the low pressure valve are closed.

By maintaining the state that the high pressure valve and the low pressure valve are closed, the operating oil is sealed in the hydraulic chamber, thereby immobilizing the piston (in a hydraulic locked state). As a result, the rotor is temporarily locked. Further, in the hydraulic locked state, the operating oil leaks to some extent, and it is difficult to completely immobilize the rotor. This is, however, extremely useful to temporarily lock the rotor before completely locking the rotor.

In the above rotor locking method, in the step of stopping the rotor, the torque of the hydraulic pump may be adjusted to a torque demand value in accordance with a rotation speed of the rotor and a pitch angle of the blade is changed toward a feathering position so as to apply a force of aerobraking to the rotor in addition to the braking force applied by the hydraulic pump. In this case, both the braking force by the hydraulic pump and the aerobraking force through the pitch control are used at least in part the process of decelerating and stopping the rotor, and it is not necessary to use both the braking force by the hydraulic pump and the aerobraking force through the pitch control in the entire period of the process of decelerating and stopping the rotor.

For instance, in the step of stopping the rotor, the torque of the hydraulic pump is adjusted to the torque demand $T_P$ according to the rotation speed of the rotor and also the pitch angle of the blade is changed to a feathering position so as to apply the aerobraking force to the rotor in addition to the braking force by the hydraulic pump.

By using both the braking force by the hydraulic pump and the aerobraking force through the pitch control as described above, the rotor can be stopped promptly. Further, by using both the braking force by the hydraulic pump and the aerobraking force through the pitch control, even if one of them fails, the other is still available to securely stop the rotor.

In the above rotor locking method, the power generating apparatus of the renewable energy type may further comprise a circuit breaker for changing a connection state between the generator and a grid, and the rotor locking method may further comprise steps of:

when output of the generator becomes not greater than a threshold value upon stopping of the rotor, disconnecting the generator from the grid by opening the circuit breaker; and
immediately before the step of disconnecting the generator, making the hydraulic motor into an idle state.

In the case where the generator connected to the grid is connected to the hydraulic motor, once electric output of the generator declines to a certain level, the generator needs to be disconnected from the grid. The disconnection of the generator, however, instantaneously causes sudden drop of the electrical output to zero. As a result, the balance between the mechanical input from the hydraulic motor to the generator and the electrical output of the generator is maintained during disconnection of the generator 6 from the grid. This causes imbalance between mechanical input from the electrical motor to the generator and the electrical output of the generator, resulting in acceleration of the generator shaft

In view of this, just before the step of disconnecting the generator from the grid, the hydraulic motor is put into an idle state. By operating the hydraulic motor in the idle state, the mechanical input from the hydraulic motor to the generator becomes zero and thus the balance between the mechanical input from the hydraulic motor to the generator and the electrical output of the generator is maintained during disconnection of the generator 6 from the grid. As a result, it is possible to prevent acceleration of the generator shaft during disconnection of the generator.

In the above rotor locking method, the power generating apparatus of the renewable energy type may further comprise a high pressure oil line for supplying the operating oil from the hydraulic pump to the hydraulic motor, an accumulator may be connected to the high pressure oil line, and in the step of stopping the rotor, at least displacement of the hydraulic pump may be increased so as to reserve in the accumulator excess operating oil that is excess in the high pressure oil line.

By increasing the displacement of the hydraulic pump to enhance the braking force (torque) by the hydraulic pump, the flow of the operating oil discharged to the high pressure oil line from the hydraulic pump increases. Thus, by reserving the excess operating oil in the accumulator, the excess operating oil (high pressure oil) can be absorbed in the accumulator.

Moreover, the accumulator may be directly connected to the high pressure oil line, or may be connected to the high pressure oil line via a solenoid valve. In the case where the accumulator is directly connected to the high pressure oil line, the excess operating oil (the high pressure oil) can be reserved in the accumulator without any particular control. Then, for a while after decelerating or stopping the rotor, the operating oil (the high pressure oil) reserved in the accumulator is gradually released to drive the hydraulic motor, thereby continuing to generate power. In contrast, in the case where the accumulator is connected to the high pressure oil line via the solenoid valve, the excess operating oil is reserved in the accumulator by opening the solenoid valve when the rotor is stopped. Then, if needed later, the reserved operating oil is released to assist rotation of the hydraulic motor.

In the above rotor locking method, the power generating apparatus of the renewable energy type may further comprise a high pressure oil line for supplying the operating oil from the hydraulic pump to the hydraulic motor, and in the step of stopping the rotor, at least displacement of the hydraulic pump may be increased, and displacement of the hydraulic motor may be temporarily increased so as to absorb excess operating oil in the high pressure oil line by means of the hydraulic motor.

By temporarily increasing the displacement of the hydraulic motor, not only the excess operating oil in the high pressure oil line caused by the increased displacement of the hydraulic pump can be absorbed by the hydraulic motor but also electric power generated by the generator can be increased. As a result, the rotational energy of the rotor is not wasted.

In the above rotor locking method, the power generating apparatus of the renewable energy type may further comprise a high pressure oil line for supplying the operating oil from the hydraulic pump to the hydraulic motor, a low pressure oil line for returning the operating oil from the hydraulic motor to the hydraulic pump, a bypass flow path connected to the high pressure oil line and the low pressure oil line for bypassing the hydraulic motor, and a relief valve provided in the bypass flow path, and in the step of stopping the rotor, at least displacement of the hydraulic pump may be increased so as to cause excess operating oil in the high pressure oil line to be released to the low pressure oil line via the bypass flow path and the relief valve.

By using the bypass flow path and the relief valve, the excess operating oil resulting from the increased displacement of the hydraulic pump can be released to the low pressure oil line from the high pressure oil line.

The above rotor locking method may further comprise a step of:

supplying a rotor stop command to the power generating apparatus of the renewable energy type from a remote site, and

the step of stopping the rotor may be performed automatically based on the rotor stop command.

As a result, the rotor can be automatically stopped according to the rotor stop command from a remote site. Therefore, for instance, when a helicopter for transporting an operator accesses the power generating apparatus of the renewable energy type, the rotor stop command may be remotely sent from the helicopter to stop the rotor automatically. As a result, this facilitates the access by the helicopter.

The above power generating apparatus of the renewable energy type may be a wind turbine generator configured such that the rotor is rotated by wind in a form of renewable energy, torque of the rotor is inputted to the generator via the hydraulic pump and the hydraulic motor and electric power is generated in the generator.

A power generating apparatus of a renewable energy type according to the present invention may comprise:

a rotor including a blade, a hub to which blade is mounted and a main shaft connected to the hub;
a hydraulic pump configured to be driven by rotation of the rotor;
a hydraulic motor configured to be driven by operating oil pressurized by the hydraulic pump;
a generator connected to the hydraulic motor;
a rotor-stop control unit for stopping the rotor by applying a braking force by at least the hydraulic pump to the rotor; and
a locking device for locking the rotor so as to immobilize the rotor in a rotational direction, and
the rotor-stop control unit may change torque of the hydraulic pump to change the braking force.

In the above power generating apparatus of the renewable energy type, the rotor-stop control unit changes the torque of the hydraulic pump to change the braking force applied to the rotor and thus the rotor can be promptly stopped at any angular position when needed. More specifically, unlike a braking force applied by a brake system, the braking force applied by the hydraulic pump 20 is finely adjustable by adjusting the displacement of the hydraulic pump or the pressure in the high pressure oil line between the hydraulic pump and the hydraulic motor. Thus the rotor can be stopped at any angular position. Further, by adjusting the torque of the hydraulic pump as needed, it is possible to apply relatively large braking force to the rotor so as to stop the rotor promptly.

Furthermore, in the case of applying the braking force by the brake system to the rotor, the rotational energy of the rotor disperses as friction heat. On the other hand, in the above case of applying the braking force by the hydraulic pump to the rotor, the rotational energy of the rotor is used to pressurize the operating oil. Thus, the high pressure oil (the pressurized operating oil) from the hydraulic pump can be used to enhance electric power generated in the generator if needed. As a result, the energy can be utilized when stopping the rotor.

The above power generating apparatus of the renewable energy type may further comprise an angular position detector for detecting an angular position of the rotor. The rotor-stop control unit may be configured to adjust the torque of the hydraulic pump based on a detection result obtained by the angular position detector so as to stop the rotor at a target angular position.

As a result, the rotor can be automatically stopped at the target angular position by appropriately adjusting the torque of the hydraulic pump. Thus, the locking operation of the rotor can be performed efficiently.

The above power generating apparatus of the renewable energy type may further comprise:

an angular position detector for detecting an angular position of the rotor;
an oil source for supplying pressurized oil to the hydraulic pump;
a valve provided in a supply path through which the pressurized oil is supplied to the hydraulic pump from the oil source; and
a valve controller for controlling opening and closing of the valve based on a detection result obtained by the angular position detector so as to drive the hydraulic pump by the pressurized oil from the oil source and rotate the rotor to a target angular position.

By driving the hydraulic pump by supplying the pressurized oil from the oil source (i.e. by causing the hydraulic pump to perform motoring operation), the rotor can be rotated to the target angular position and is stopped at this target angular position.

In the case of rotating the rotor to the target angular position by driving the hydraulic pump using the pressurized oil from the oil source, the power generating apparatus of the renewable energy type may further comprise:

a high pressure oil line for supplying the operating oil from the hydraulic pump to the hydraulic motor; and
a low pressure oil line for returning the operating oil from the hydraulic motor to the hydraulic pump. And the hydraulic pump may comprise:

a cylinder;
a piston slidable in the cylinder in response to rotation of the rotor;
a hydraulic chamber formed by the cylinder and the piston;
a high pressure valve for opening and closing a communication path between the hydraulic chamber and the high pressure oil line;
a low pressure valve for opening and closing a communication path between the hydraulic chamber and the low pressure oil line; and
a casing for housing the cylinder, the piston, the hydraulic chamber, the high pressure valve and the low pressure valve. And the supply path may penetrate the casing from the oil source and communicates with the hydraulic chamber, and the valve may be a solenoid valve provided in the supply path for the pressurized oil.

In the hydraulic pump having the piston, the hydraulic chamber, the high pressure valve, the low pressure valve and the casing for housing these components, compact high pressure valve and low pressure valve are used in some cases. These compact high pressure valves and low pressure valves are designed to open and close using a pressure difference between the hydraulic chamber and the high pressure oil line or the low pressure oil line or to assist the opening and closing. This type of high pressure valve and low pressure valve housed in the casing is not openable/closable until there is the pressure difference generated by the reciprocating motion of the piston in response to the rotation of the rotor. When driving the hydraulic pump by the pressurized oil from the oil source, the pressure difference is not available and thus the opening and closing of the high pressure valve and low pressure valve cannot be controlled. Therefore, by providing a valve for changing the supply state of the operating oil to the hydraulic pump separately from the high pressure valve and low pressure valve housed in the casing, the hydraulic pump can be positively driven by the pressurized oil from the oil source.

The valve may be attached to the outside of the casing. The valve may be attached to an end face of the casing that is on a side farther from the hub.

Further, in this case, the hydraulic pump further comprise a ring cam having wave-shaped lobes for determining a reciprocating motion cycle of the piston, and the hydraulic pump may have a plurality of groups each of which is formed by at least two of the pistons having the same phase of the reciprocating motion cycle, and the valve may be commonly provided for the at least two of the pistons belonging to each of the groups.

For the purpose of preventing pulsation and precisely controlling the displacement, this type of hydraulic pump is topically designed such that a plurality of the pistons reciprocates in different cycles. Further, the hydraulic pump is usually designed with more than one group of at least two pistons that have the same phase of the reciprocating motion cycle in order to prevent the pulsation and to maintain the precise control of the displacement. In this manner, even if one of the pistons fails, other pistons belonging to the same group as the failed piston can continue operating.

Therefore, by commonly providing the valve (a common valve) for n piston of the same group having the same phase of the reciprocating motion cycle (n being an integer not less than two), it is possible to drive the hydraulic pump using the pressurized oil from the oil source by opening and closing the common valve in synchronization with the movement of the ring cam. Thus, it is possible to perform the drive control of the hydraulic pump by the pressurized oil with fewer valves.

Further, in the case where the phase of the reciprocating motion cycle of the n pistons is the same, the redundancy is n.

In the above power generating apparatus of the renewable energy type, the locking device may be a locking pin insertable in a first hole formed on a rotor side and a second hole formed on a nacelle side for housing the main shaft, the hydraulic pump may comprise a plurality of cylinders, a plurality of pistons being slidable in the plurality of cylinders, respectively, and a ring cam provided on an outer circumference of the main shaft and having wave-shaped lobes for determining a reciprocating motion cycle of the plurality of pistons, and a shape of the ring cam may be determined so that the first hole matches the second hole when at least one of the pistons is at a root of the lobes of the ring cam.

It is easier to maintain the rotor at the angular position where at least one of the pistons is at the root of the lobes of the ring cam than to maintain the rotor at an angular position where none of the piston is at the root of the lobes of the ring cam. Therefore, by determining the shape of the ring cam so that the first hole matches the second hole when at least one of the pistons is at a root of the lobes of the ring cam, the rotor can be easily kept at the angular position after stopping the rotor at the angular position where the first hole matches the second hole and until the locking pin is inserted. As a result, the locking operation of the rotor can be performed efficiently.

In the above power generating apparatus of the renewable energy type, the locking device may be a locking pin insertable in a first hole formed on a rotor side and a second hole formed on a nacelle side for housing the main shaft, and the power generating apparatus of the renewable energy type may further comprise:

an angular position detector for detecting an angular position of the rotor;
an actuator attached to the locking pin;
a determination unit for determining whether or not the first hole matches the second hole based on a detection result obtained by the angular position detector; and
an actuator control unit for causing the actuator to insert the locking pin in the first hole and the second hole when it is determined that the first hole matches the second hole.

As a result, the operation of inserting the locking pin into the first hole and the second hole using the actuator can be automated. Thus, the locking operation of the rotor can be performed efficiently.

In the above power generating apparatus of the renewable energy type, the locking device may be a locking pin insertable in a first hole formed on a rotor side and a second hole formed on a nacelle side for housing the main shaft, and a tip surface of the locking pin and an opening end surface of at least one of the first hole or the second hole opposite to a direction of inserting the locking pin may be chamfered.

By chamfering the tip surface of the locking pin and the opening end surface of at least one of the first hole or the second hole, the locking pin can be easily inserted into the first hole and the second hole. Thus, the locking operation of the rotor can be performed efficiently.

[Fffects of The Invention]

According to the present invention, the torque of the hydraulic pump is changed so as to adjust the braking force applied to the rotor. Thus, it is possible to stop the rotor at any angular position promptly when needed. More specifically, unlike a braking force applied by a brake system, the braking force applied by the hydraulic pump 20 is finely adjustable by adjusting the displacement of the hydraulic pump or the pressure in the high pressure oil line between the hydraulic pump and the hydraulic motor. Thus the rotor can be stopped at any angular position. Further, by adjusting the torque of the hydraulic pump as needed, it is possible to apply relatively large braking force to the rotor so as to stop the rotor promptly.

Further, in the case of applying the braking force by the brake system to the rotor, the rotational energy of the rotor disperses as friction heat. On the other hand, in the case of applying the braking force by the hydraulic pump to the rotor, the rotational energy of the rotor is used to pressurize the operating oil. Thus, the high pressure oil (the pressurized operating oil) from the hydraulic pump can be used to enhance electric power generated in the generator if needed. As a result, the energy can be utilized when stopping the rotor.

[Brief Description of Drawings]

[FIG.1] FIG.1 is an illustration of a configuration of a wind turbine generator according to a first embodiment.
[FIG.2] FIG.2 is an illustration of a configuration of a pitch drive system.
[FIG.3A] FIG.3A is a cross-sectional view of a hub and a nacelle in a periphery of locking p ins.
[FIG.3B] FIG.3B is a view taken from arrow A of FIG.3A.
[FIG.3C] FIG.3C is a cross-sectional view taken along line B-B of FIG.3B.
[FIG. 4] FIG.4 is an illustration of a configuration of a hydraulic transmission.
[FIG.5] FIG.5 is an illustration of a configuration of the hydraulic pump.
[FIG.6] FIG.6 is a flow chart depicting a process of controlling the hydraulic pump by a pump controller when stopping a rotor.
[FIG.7] FIG.7 is an illustration of a configuration of the hydraulic pump additionally provided with a valve for motor operation.
[FIG.8] FIG.8 is a chart depicting a timing of opening and closing the valve for motor operation (a solenoid valve) and a low pressure valve.
[FIG.9] FIG.9 is an illustration of a hydraulic circuit for motor operation of the hydraulic pump with use of operating oil circulating in the hydraulic transmission.
[FIG.10] FIG.10 is a flow chart depicting a process until stopping the rotor at a target angular position.
[FIG.11] FIG.11 is a cross-sectional view of a configuration inside a nacelle of the wind turbine generator according to a third embodiment.
[FIG.12] FIG.12 is an illustration of a detailed configuration around a brake disk.
[FIG.13] FIG.13 is an oblique perspective view of a main shaft and the brake disk taken from a hub side.
[FIG.14] FIG.14 is an illustration of a configuration of a geared motor.
[FIG.15] FIG.15 is a flow chart depicting a process until stopping the rotor at the target angular position.
[FIG.16] FIG.16 is an illustration of automatic insertion of the locking pin.

[Description of Embodiments]

Embodiments of the present invention will now be described in detail with reference to the accompanying drawings. It is intended, however, that unless particularly specified, dimensions, materials, shape, its relative positions and the like shall be interpreted as illustrative only and not limitative of the scope of the present invention.

While the present invention has been described with reference to exemplary embodiments, it is obvious to those skilled in the art that the first embodiment and the second embodiment may be freely combined and various changes may be made without departing from the scope of the invention.

In the following embodiments, a wind turbine generator is described as an example of the power generating apparatus of the renewable energy type. However, this is not limitative and the present invention is also applicable to other types of power generating apparatuses of a renewable energy type such as a tidal generator, an ocean current generator and a river current generator.

[FIRST EMBODIMENT]

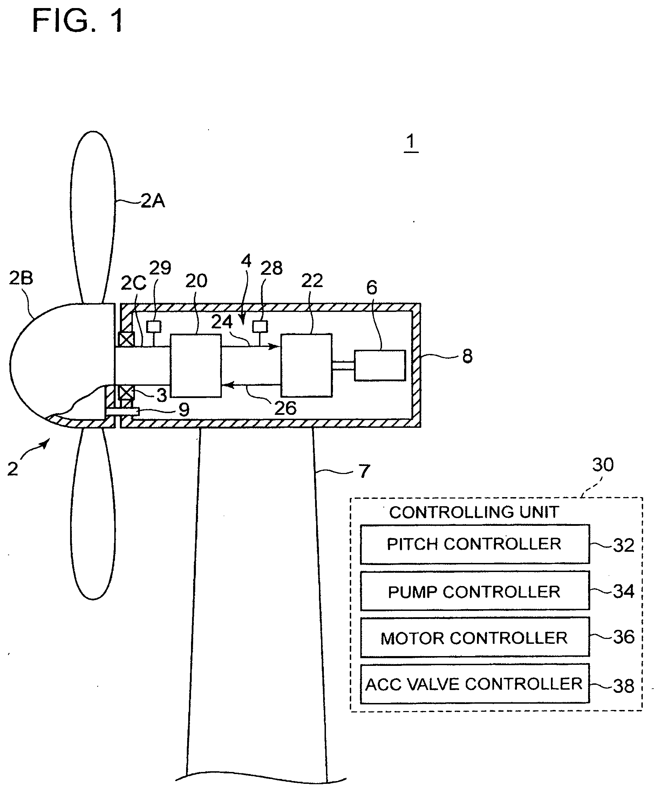

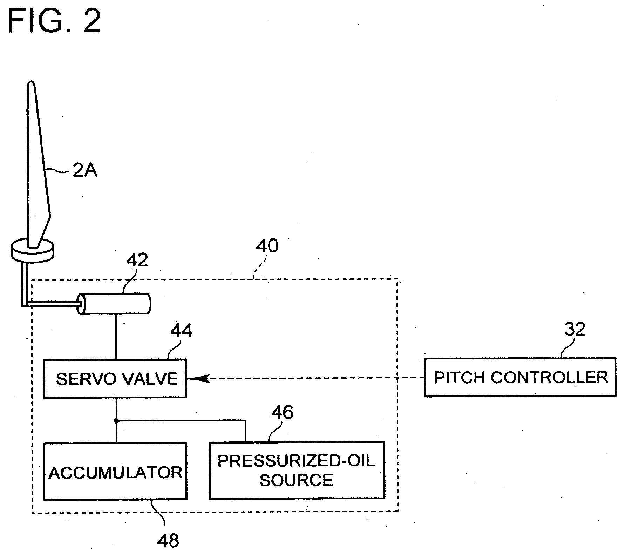

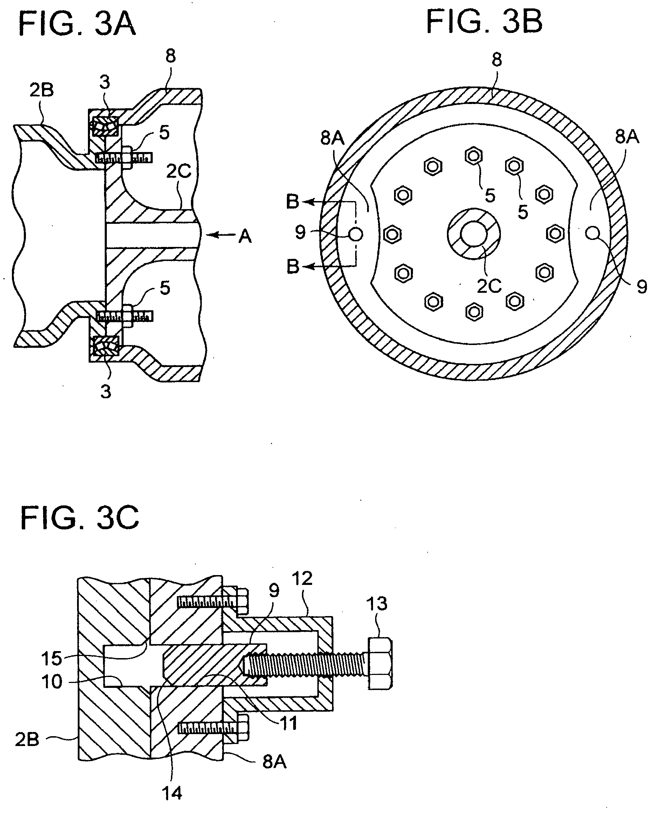

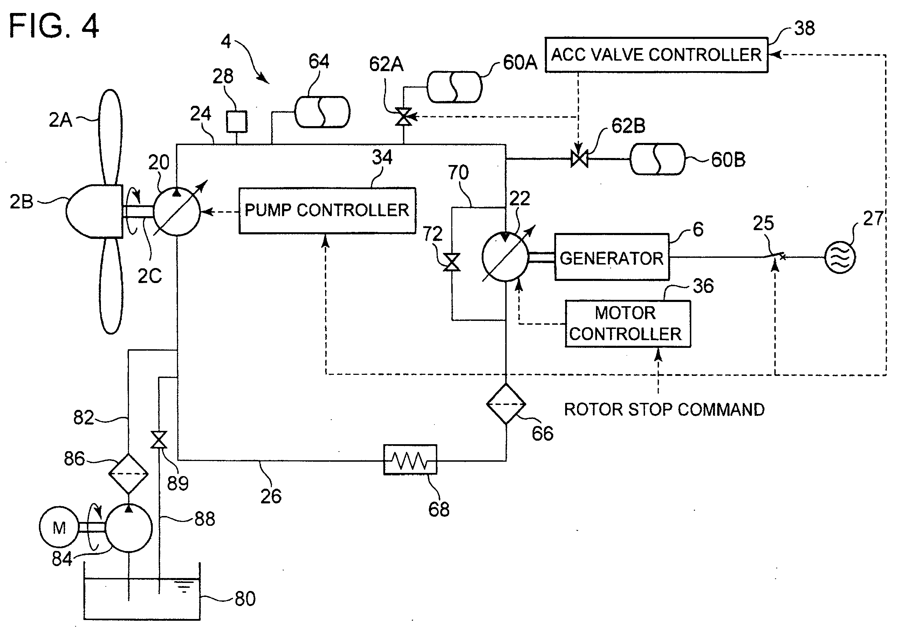

FIG.1 is an illustration of a configuration of a wind turbine generator according to a first embodiment. FIG.2 is an illustration of a configuration of a pitch drive system. FIG.3A is a cross-sectional view of a hub and a nacelle in a periphery of locking pins. FIG.3B is a view taken from arrow A of FIG.3A. FIC.3C is a cooss-sectional view taken along line B-B of FIG.3B. FIG.4 is an illustration of a configuration of a hydraulic transmission.

As shown in FIG.1, the wind turbine generator 1 is mainly provided with a rotor 2 rotating upon receiving wind, a hydraulic transmission 4 for increasing a rotation speed of the rotor 2, a generator 6 for generating electric power, and a control unit 30 for controlling a variety of components in the wind turbine generator 1.

The control unit 30 functions as a "rotor-stop control unit" upon receiving a rotor stop command and controls each part of the wind turbine generator 1 (a pitch drive system 40, a hydraulic pump 20, a hydraulic motor 22 and an accumulator valve 62 all of which are described later) so as to stop the rotor 2. The control unit 30 includes a pitch controller 32 for controlling the pitch drive system 40, a pump controller 34 for controlling the hydraulic pump 20, a motor controller 36 for controlling the hydraulic motor 22, and an ACC valve controller 38 for controlling opening and closing of an accumulator valve 62 (62A, 62B). The pitch controller 32, the pump controller 34, the motor controller 36 and the ACC valve controlled 38 are described later in details.

The rotor 2 is formed by a blade 2A, a hub 2B to which the blade 2A is mounted, and a main shaft 2C connected to the hub 2B. With this configuration, the entire rotor 2 is rotated by a force of the wind received by the blade 2A and the rotation is inputted from the main shaft 2C to the hydraulic transmission 4. The angular position (rotational displacement) of the rotor 2 is measured by an angular position detector 29 attached to the main shaft 2C and then used for control performed by the control unit 30. The angular position detector 29 may be, for instance, a rotary encoder or a resolver.

The main shaft 2C of the rotor 2 is housed in a nacelle 8 rotatably supported by a tower 7. The nacelle 8 supports the main shaft 2C via a main shaft bearing 3.

The pitch drive system 40 illustrated in FIG.2 is housed in the hub 2B. The pitch drive system 40 is formed by a hydraulic cylinder 42, a servo valve 44, a pressurized-oil source 46 and an accumulator 48. The servo valve 44 adjusts, under control of the pitch controller 32, a supply amount of high pressure oil so as to achieve a desired pitch angle of the blade 4. The high pressure oil whose supply amount is controlled includes the high pressure oil generated by the pressuriaed-oil source 46 and the high pressure oil reserved in the accumulator 48.

The pitch drive system 40 equipped with the hydraulic cylinder 42 is illustrated in FIG.2. The pitch drive system 40 may use an actuator of any structure instead of the hydraulic cylinder 42 to adjust the pitch angle of the blade 2A by rotating the blade 2A around its axial center. For instance, an electric motor (a servomotor) may be used as an actuator to adjust the pitch angle. In this case, it may be configured that the control signal from the pitch controller 32 is inputted to the electric motor and under control of the pitch controller 32, the electric motor adjusts the pitch angle of the blade 2A.

The rotor 2 is configured to be locked by the locking pin 9 illustrated in FIG.1. The locking pin 9 is inserted in each of the holes formed on the rotor side and on the nacelle side to lock the rotor 2. The configuration of the locking pin 9 and the holes where the locking pin is inserted are not particularly limited as long as the rotor 2 can be locked. The locking pin 9 and the holes may be configured as illustrated in FIG.3A to FIG.3C.

In the case illustrated in FIG.3A to FIG.3C, the hub 2B and the main shaft 2C are integrally fastened together by a plurality of fastening members 5 and then fixed to an inner ring of the main shaft bearing 3. Further, a first hole 10 (see FIG.3C) is formed in the hub 213.

The nacelle 8 is fixed to an outer ring of the main shaft bearing 3 at its end. As illustrated in FIG.3B, the end of the nacelle 8 partially projects inward (inward toward an axial center of the main shaft 2C) to form a projection 8A. In the projection 8A, a second hole 11 (see FIG.3C) is formed.

The locking pin 9 is insertable into the first hole 10 formed in the hub 2B and the second hole 11 formed in the projection 8A of the nacelle 8. Further, as illustrated in FIG.3C, a cylindrical member 12 is provided around the second hole 11. The cylindrical member 12 is fixed to the projection 8A. A male screw of a screw member 13 penetrating the cylindrical member 12 is screwed with a female screw formed in the cylindrical member 12. An end of the screw member 13 is screwed into a rear end of the locking pin 9. As a result, by rotating the screw member 13, the locking pin 9 can be freely forward and backward.

As shown in FIG.3C, a corner portion 14 of the end face of the locking pin 9 and a corner portion 15 of an opening end surface of the first hole 10 of the hub 2B are chamfered so that the locking pin 9 can be inserted smoothly. The corner portions 14, 15 may be chamfered into an inclined surface of approximately 45°C by cutting off corners, or may be round-chamfered by rounding the corners.

FIG.3C illustrates the case where the corner portion 15 of the opening end surface of the first hole 10 is chamfered. However, this is not limitative and a corner portion of an opening end surface of the projection 8A of the nacelle 8 may be chamfered as well, which is an opposite side in a direction of inserting the locking pin 9 (the opening end surface on the right hand side in FIG.3C).

The hydraulic transmission 4 illustrated in FIG.1 and FIG.4 is provided with the hydraulic pump 20 of a variable displacement type driven by rotation of the main shaft 2C, a hydraulic motor 22 of a variable displacement type connected to the generator 6, a high pressure oil line 24 and a low pressure oil line 26 arranged between the hydraulic pump 20 and the hydraulic motor 22.

An outlet port of the hydraulic pump 20 is connected to an inlet port of the hydraulic motor 22 by the high pressure oil line 24. An inlet port of the hydraulic pump 20 is connected to an outlet port of the hydraulic motor 22 by the low pressure oil line 26. The operating oil (high pressure oil) discharged from the hydraulic pump 20 enters the hydraulic motor 22 via the high pressure oil line 24 to drive the hydraulic motor 22. The operating oil (low pressure oil) having performed the work in the hydraulic motor 22 then enters the hydraulic pump 20 via the low pressure oil line 26. The operating oil is pressurized in the hydraulic pump 20 and then enters the hydraulic motor 22 again via the high pressure oil line 24.

The generator 6 connected to the hydraulic motor 22 is a synchronous generator connected to the grid 27 via a circuit breaker 25. The motor controller 36 adjusts the displacement of the hydraulic motor 22 so as to constantly maintain such a state that a generator shaft rotates at a synchronous speed based on a grid frequency of the grid 27 while the generator 6 is connected to the grid 27.

To the high pressure oil line 24, an accumulator 60 (60A, 60B) is connected via the accumulator valve 62 (62A, 62B). The accumulator 60 may be a piston-type accumulator or a bladder-type accumulator having gas and the operating oil separated by a deformable bag (a bladder). In the accumulator 60 when storing pressure, the high pressure operating oil enters the accumulator 60 and the bladder is deformed or the piston is pushed, thereby compressing the gas. In contrast, when releasing the pressure, the compressed gas expands or high pressure gas is additionally introduced to deform the bladder or push the piston, thereby pushing the operating oil out from the accumulator 60. The opening and closing of the accumulator valve 62 is controlled by the ACC valve controller 38.

FIG.4 illustrates the case where the accumulator 60 is connected to the high pressure oil line 24 via the accumulator valve 62. However, this is not limitative and the accumulator 60 may be directly connected to the high pressure oil line 24 without the accumulator valve 62. In this case, there is no control performed by the ACC valve controller 38.

In the high pressure oil line 24, a pressure sensor 28 for measuring the pressure of the operating oil in the high pressure oil line 24 and an accumulator 64 for preventing pulsation (pressure fluctuation of the operating oil) are provided.

In the low pressure oil line 26, an oil filter 66 for removing impurities contained in the operating oil and an oil cooler 68 for cooling the operating oil are provided. Further, an oil tank 80 is connected to the low pressure oil line 26 via a replenishing line 82 and a return line 88.

The oil tank 80 reserves the operating oil for replenishment. The operating oil reserved in the oil tank 80 is pumped by a boost pump 84 provided in the replenishing line 82 and supplied to the low pressure oil line 26. The operating oil passes through the oil filter 86 provided in the replenishing line 82 to remove impurities and then supplied to the low pressure oil line 26. By replenishing the operating oil in the low pressure oil line 26 in this manner, even when the operating oil leaks inside the hydraulic transmission 4, the amount of the operating oil circulating in the hydraulic transmission 4 can be maintained. Further, by providing the return line 88 and the relief valve 89 between the low pressure oil line 26 and the oil tank 80, the pressure in the low pressure oil line 26 can be maintained near a setting pressure of the relief valve 89.

A bypass flow path 70 is provided between the high pressure oil line 24 and the low pressure oil line 26 to bypass the hydraulic motor 22. In the bypass flow path 70, a relief valve 72 is provided to maintain the pressure of the operating oil in the high pressure oil line 24 at or below a setting pressure of the relief valve 72. Thus, when the pressure of the operating oil in the high pressure oil line 24 exceeds the setting pressure of the relief valve 72, the relief valve 72 automatically opens to release the high pressure oil to the low pressure oil line 26 via the bypass flow path 70.

The hydraulic pump 20 and the hydraulic motor 22 are variable-displacement pump and motor configured so that their displacements are adjustable. The displacement of the hydraulic pump 20 and the hydraulic motor 22 are controlled by the pump controlled 34 and the motor controller 36 respectively.

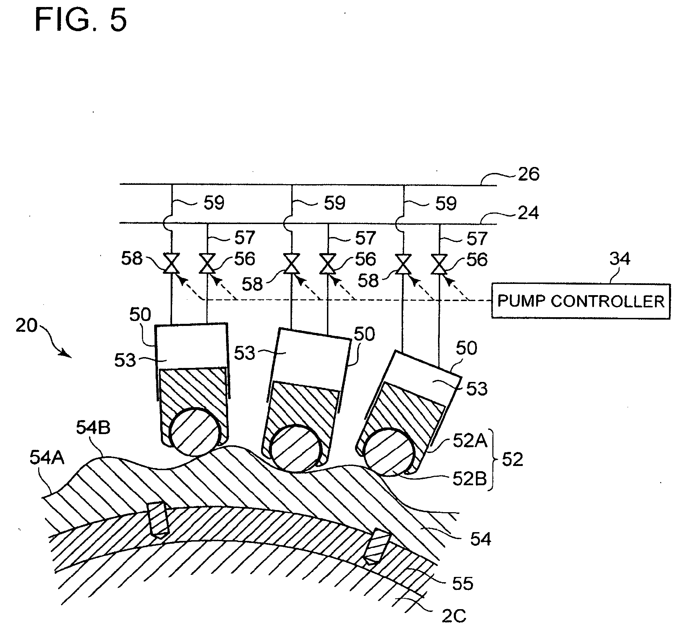

FIG.5 is an illustration of a configuration of the hydraulic pump 20. As illustrated in FIG.5, the hydraulic pump 20 is formed by: a plurality of hydraulic chambers formed by a plurality of cylinders 50 and a plurality of pistons 52, respectively; a cam having a cam profile engaging with the pistons 52; and a high pressure valve 56 and a low pressure valve 58 that are provided for each of the hydraulic chambers 53.

From the perspective of operating the piston 52 smoothly along the cam profile of the cam 54, the piston 52 may be formed by a piston body 52A slidable in the cylinder 50 and a piston roller or a piston shoe which is attached to the piston body 52A and engageable with the cam profile of the cam 54. FIG.5 illustrates the case where the piston 52 is formed by the piston body 52A and the piston roller 52B.

The cam 54 is attached to an outer periphery of the main shaft 2C via a cam mount 55. While the main shaft 2C makes one rotation, the cam 54 moves each of the pistons 52 up and down a number of times to obtain large torque. In this view, a ring cam is configured to have wave-shaped lobes with depressions 54A and projections 54B alternately formed around the main shaft 2C. Further, the shape of the ring cam 54 may be determined so that the first hole 10 on the rotor 2 side matches the second hole 11 on the nacelle 8 side when at least one of the pistons 52 is at a root of the lobes of the ring cam 54 (the deepest point of the depression 54A). FIG.5 illustrates the case where a middle one of the three pistons 52 is at the root of the lobes of the ring cam 54. By determining the shape of the ring cam 54 in this manner, at the angular position of the rotor 2 where the first hole 10 matches the second hole 11, the piston roller 52B of at least one of the pistons 52 is fitted in the root of the lobes of the ring cam 54. Thus, the rotor 2 can be easily maintained at the angular position. As a result, the locking operation of the rotor 2 is performed efficiently.

The high pressure valve 56 is arranged in a high pressure communication path 57 between the high pressure oil line 24 and each of the hydraulic chambers 53, whereas the low pressure valve 58 is arranged in a low pressure communication path 59 between the low pressure oil line 26 and each of the hydraulic chambers 53. Timing for opening and closing the high pressure valve 56 and the low pressure valve 58 is controlled by the pump controller 34.

The pump controller 34 is configured to adjust displacement $D_P$ of the hydraulic pump 20 by changing a ratio of active chambers to the entire hydraulic chambers 53. The active chambers indicate the hydraulic chambers contributing to raising the pressure of the operating oil.

As for the active chambers among all the hydraulic chambers 53, the pump controller 34 controls the high pressure valve 56 to open and the low pressure valve 58 to close in a pump stroke in which the piston 52 moves from a bottom dead center toward a top dead center. Further, the pump controller 34 controls the high pressure valve 56 to close and the low pressure valve 58 to open in an intake stroke in which the piston 52 moves from the top dead center toward the bottom dead center. As a result, the high pressure oil is discharged from the active chamber to the high pressure oil line 24 via the high pressure valve 56 in the pump stroke and the low pressure oil is supplied to the active chamber from the low pressure oil line 26 via the low pressure valve 58 in the intake stroke. In contrast, as for the rest of the hydraulic chambers (non-active chambers) besides the active chambers, the pump controller 34 controls so as to maintain the high pressure valve 56 closed and the low pressure valve 58 open in cycles in which the piston 52 moves from the bottom dead center to the top dead center and returns to the bottom dead center. As a result, the high pressure oil is not discharged from the non-active chambers to the high pressure oil line 24 and thus the non-active chambers do not contribute to pressurizing of the operating oil.

In the case described herein, opening and closing of each of the high pressure valve 56 and the low pressure valve 58 is controlled. However, this is not limitative and a check valve may be used as the high pressure valve 56 so as to allow only a flow of the operating oil toward the high pressure oil line 24. In this case, while the piston 52 of the hydraulic pump 20 moves from the bottom dead center toward the top dead center, the operating oil in the hydraulic chamber 53 is pressurized, and once the pressure in the hydraulic chamber 53 exceeds the pressure in the high pressure oil line 24, the high pressure valve 56 opens automatically. Thus, it is not necessary to actively control the high pressure valve 56.

The rotor locking method for the wind turbine generator 1 according to this embodiment is described.

In this embodiment, prior to ultimately locking the rotor 2 by inserting the locking pin 9 in the first hole 10 on the rotor 2 side and the second hole 11 on the nacelle 8 side, a position of the first hole 10 is matched with a position of the second hole 11. First, the hydraulic pump 20 is controlled by the pump controlled 34 and a braking force is applied by at least the hydraulic pump 20 to the rotor 2 to stop the rotor 2 at a target angular position. The "target angular position" herein means an angular position of the rotor at which the first hole 10 matches the second hole 11.

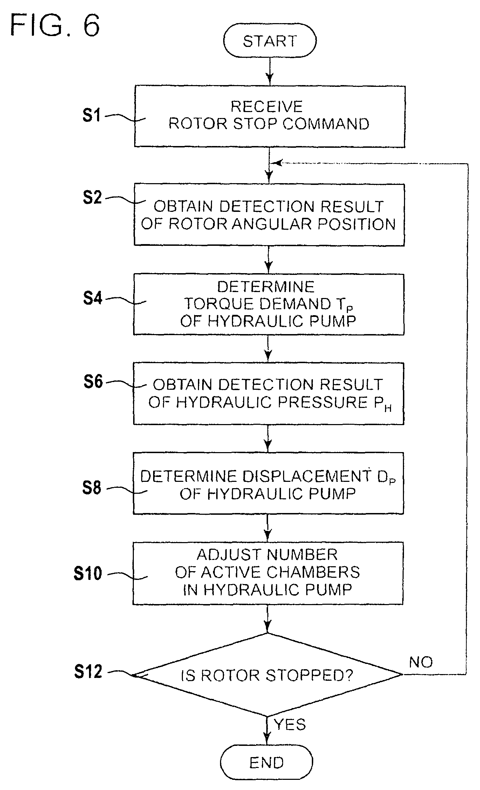

FIG.6 is a flow chart depicting a process of controlling the hydraulic pump 20 by the pump controller 34 when stopping the rotor 2.

First, a rotor stop command is received by the control unit 30 (step S1). The rotor stop command may be directly inputted from an input terminal of a control device of the wind turbine generator 1, or may be inputted from a remote site using wireless communication or wire communication. For instance, when a helicopter for transporting an operator is trying to access the power generating apparatus of the renewable energy type, the rotor stop command may be sent to the control unit 30 by remote control from the helicopter. Alternatively, the rotor stop command may be sent to the control unit 30 by remotely operating from a farm control room of the wind farm to which the wind turbine generator 1 belongs.

Next, the pump controller 34 of the control unit 30 obtains a detection result of the angular position (rotational displacement) of the rotor 2 by the angular position detector 29 (step S2). Then, based on the detection result of the angular position of the rotor 2, a torque demand $T_P$ of the hydraulic pump 20 for stopping the rotor 2 at a desired angular position is calculated (step S4). In this process, the torque demand $T_P$ may be calculated using formula (1) below.
[Formula 1]

$$I \times \frac{d^2\theta}{dt^2} = T_{aero} - T_P \tag{1}$$

In the formula (1), I is an inertia moment of the rotor 2, $\theta$ is an angular position of the rotor 2, t is time, $T_{aero}$ is a torque inputted to the rotor 2 from the wind, and $T_P$ is a torque demand of the hydraulic pump 20.

Further, the pump controller 34 obtains a pressure $P_H$ of the operating oil in the high pressure oil line 24 using the pressure sensor 28 (step S6). Then, the pump controller 34, based on the torque demand $T_P$ of the hydraulic pump 20 and the pressure $P_H$ of the operating oil in the high pressure oil line 24, determines a displacement $D_P$ of the hydraulic pump 20 (step S8). In the process, the displacement $D_P$ of the hydraulic pump 20 may be calculated using formula (2) below.
[Formula 2]

$$D_P = T_P / P_H \tag{2}$$

Next, the pump controller 34 adjusts the number of active chambers of the hydraulic pump 20 in accordance to a formula (3) bellow so as to achieve the displacement $D_P$ of the hydraulic pump 20 (step S10).
[Formula 3]

$$D_P = m \times V_p \times Fdp \qquad (3)$$

In the formula (3), m is the number of lobes of the cam 54, Vp is net displacement of all the cylinders 50, and Fdp is a ratio of the active chambers to all the hydraulic chambers 53.

Next, the process advances to step S12 to determine whether or not the rotor 2 is stopped. In this process, the state of the rotor 2 may be determined based on the detection result of the angular position of the rotor 2 detected by the angular position detector 29. If the rotor 2 is not stopped (NO in the step S12), the process returns to the step S2 to control the hydraulic pump 20 again. On the other hand, if the rotor 2 is stopped (YES in the step S12), the process advances to a locking operation of the rotor 2 using the locking pin 9.

Until the rotor 2 is made completely immovable by the locking pin 9, the rotor 2 may be temporarily locked by maintaining such a state the high pressure valve 56 and the low pressure valve 58 of the hydraulic pump 20 are closed to keep the operating oil within the hydraulic chamber 53, thereby immobilizing the piston 52 (in a hydraulic locked state). As a result, the locking pin 9 can be efficiently inserted in the first hole 10 and the second hole 11.

By changing the displacement $D_P$ of the hydraulic pump 20 to stop the rotor 2 at the target angular position, a discharge amount of the operating oil from the hydraulic pump 20, $Q_P$ (=the displacement $D_P$ x the rotation speed $n_P$ of the hydraulic motor 20) changes as well. This causes the operating oil in the high pressure oil line 24 to be over-supplied or under-supplied. Thus, the opening and closing of the accumulator valve 62 (62A, 62B) may be controlled by the ACC valve controller 38 or the displacement $D_M$ of the hydraulic motor 22 may be controlled by the motor controller 36 so as to absorb excess or supply deficiency of the operating oil in the high pressure oil line 24.

For instance, in such a case that the displacement $D_P$ is increased in the step S8 to increase the braking force (the torque) by the hydraulic pump 20, the discharge amount $Q_P$ of the operating oil from the hydraulic pump 20 increases, thereby generating the excess operating oil in the high pressure oil line 24. To solve this, the accumulator valve 62 (62A, 62B) is opened by the ACC valve controller 38 to feed the excess operating oil from the high pressure oil line 24 to the accumulator 60 (60A, 60B) and then, the accumulator valve 62 (62A, 62B) is closed to reserve the excess operating oil in the accumulator 60 (60A, 60B). The operating oil having been reserved in the accumulator 60 may be released later when needed by opening the accumulator valve 62 (62A, 62B) by means of the ACC valve controller 38. For instance, the excess operating oil may be released from the accumulator 60 (60A, 60B) to assist rotation of the hydraulic motor 22.

Further, in the case where the accumulator 60 (60A, 60B) is directly connected to the high pressure oil line 24 without the accumulator valve 62 (62A, 62B), the excess operating oil can be reserved in the accumulator 60 (60A, 60B) without particular control. Furthermore, for a while after stopping or decelerating of the rotor 2, the operating oil reserved in the accumulator 60 may be released gradually so as to keep the hydraulic motor 22 operated to generate power.

Alternatively, the excess operating oil generated by the increased displacement $D_P$ of the hydraulic pump 20 may be absorbed by increasing the displacement $D_M$ of the hydraulic motor 22. In such case, an increased amount of the displacement of the hydraulic motor 22, $\Delta D_M$ may be determined in accordance to formula (4) below.
[Formula 4]

$$\Delta D_M = Q_{EXCESS} / n_G \qquad (3)$$

In the formula (4), $Q_{EXCESS}$ is the excess amount of the operating oil and $n_G$ is the rotation speed of the generator 6 (i.e. the rotation speed of the hydraulic motor 22). In this case, for an amount corresponding to the increased amount of the displacement $\Delta D_M$, more electric power is generated in the generator 6

Alternatively, the excess operating oil generated by the increased displacement $D_P$ of the hydraulic pump 20 may be released to the low pressure oil line 26 via the bypass flow path 70 by opening the relief valve 72.

When dealing with the excess operating oil in the high pressure oil line 24, it is given a priority to reserve the excess operating oil in the accumulator 60. For instance, once the amount of the reserved operating oil reaches an amount corresponding to the capacity of the accumulator 60, the displacement $D_M$ of the hydraulic motor 22 is increased. Further, the relief valve 72 may be opened only when the excess operating oil cannot be absorbed by increasing the displacement $D_M$. The reserving of the operating oil is most effective as the reserved operating oil in the accumulator 60 can be used later when needed and increasing of the displacement $D_M$ is also effective as it leads to more power generation. On the other hand, by opening the relief valve 72, the released energy is not utilized. Further, opening of the relief valve raises the temperature of the operating oil when passing through the relief valve 72. The increased temperature of the operating oil needs to be adjusted. In view of these, the reserving of the operating oil in the accumulator 60 and increasing of the displacement $D_M$ of the hydraulic motor 22 are performed with priority.

In the process of stopping the rotor 2, once the electrical output of the generator 6 is reduced to a certain extent, the generator 6 is disconnected from the grid 27. By disconnecting the generator 6, the electrical output of the generator 6 instantaneously drops to zero. This causes imbalance between the mechanical input to the generator 6 from the electrical motor 22 and the electrical output from the generator 6, resulting in acceleration of the generator shaft.

In view of this, just before the step of disconnecting the generator 6 from the grid 27 by opening the circuit breaker 25 once the output of the generator 6 is reduced to a threshold value or lower, the hydraulic motor 22 may be put into an idle state. By operating the hydraulic motor 22 in the idle state, the mechanical input from the hydraulic motor 22 to the generator 6 becomes zero and thus the balance between the mechanical input from the hydraulic motor 22 to the generator 6 and the electrical output of the generator 6 is maintained while the generator 6 is disconnected from the grid. As a result, it is possible to prevent acceleration of the generator shaft when disconnecting the generator from the grid.

The "idle state" herein indicates a state in which the displacement of the hydraulic motor 22 is zero.

As described above, in this embodiment, after the rotor 2 is stopped by changing the torque of the hydraulic pump 20 and applying the braking force by at least the hydraulic pump 20 to the rotor 2, the rotor 2 is locked using the locking pin 9 so that the rotor 2 becomes immovable in the rotation direction.

Thus, it is possible to promptly stop the rotor 2 at any angular position. More specifically, unlike the braking force applied by the brake system, the braking force by the hydraulic pump 20 is finely adjustable by adjusting the displacement $D_P$ of the hydraulic pump 20 or the pressure $P_H$ in the high pressure oil line 24 and thus the rotor 2 can be stopped at any angular position. Further, by adjusting the torque $T_P$ of the hydraulic pump 20 as needed, it is possible to apply relatively large braking force to the rotor 2 so as to stop the rotor 2 promptly. In the case of applying the braking force by the brake system to the rotor 2, the rotational energy of the rotor 2 disperses as friction heat. But, in the above case of applying the braking force by the hydraulic pump 20 to the rotor 2, the rotational energy of the rotor 2 is used to pressurize the operating oil. Further, the high pressure oil (the pressurized operating oil) from the hydraulic pump 20 can be used to increase electric power generated in the generator 6 if needed. As a result, the rotational energy can be utilized when stopping the rotor 2.

In this embodiment, the torque demand $T_P$ of the hydraulic pump 20 for stopping the rotor 2 at the target angular position is calculated based on the detection result of the annular position of the rotor 2 and the hydraulic pump 20 is controlled to achieve the displacement $D_P$ determined based on the calculated torque demand $T_P$. More specifically, the displacement $D_P$ of the hydraulic pump 20 is adjusted based on the detection result obtained by the angular position detector 28 so as to stop the rotor 2 at the target angular position where the first hole 10 formed on the rotor 2 side matches the second hole 11 formed on the nacelle 8 side. In this manner, the rotor 2 can be automatically stopped at the target angular position by adjusting the braking force applied by the hydraulic pump 20. As a result, the locking operation of the rotor 2 can be performed efficiently.

In this embodiment, the torque (the braking force) of the hydraulic pump 20 is applied to the rotor 2 to stop the rotor 2. However, this is not limitative and an aerobraking force may be applied to the rotor 2 in addition to the braking force by the hydraulic pump 20. The aerobraking force is generated by changing the pitch angle of the blade 2A to the feathering position by means of the pitch drive system 40 under control of the pitch controller 32. By using both the braking force by the hydraulic pump 20 and the aerobraking force, the rotor 2 can be stopped more promptly. Further, by using both the braking force by the hydraulic pump 20 and the aerobraking force, even if one of the braking forces does not work properly, the other one of the braking forces is still available to firmly stop the rotor 2.

In this case, both the braking force by the hydraulic pump 20 and the aerobraking force through the pitch control are used at least, in a part of the process of decelerating and stopping the rotor 2 (the process from receiving the rotor stop command for stopping the rotor 2), and it is not necessary to use both the braking force by the hydraulic pump 20 and the aerobraking force through the pitch control in the entire period of the process of decelerating and stopping the rotor. For instance, only one of the braking force by the hydraulic pump 20 and the aerobraking force through the pitch control may be used for a certain part of the process of decelerating and stopping the rotor 2 and both of the forces may be used for the rest of the process.

In the case of using both the braking force by the hydraulic pump 20 and the aerobraking force through the pitch control, upon receiving the rotor stop command, the torque of the hydraulic pump 20 is adjusted to the torque demand $T_P$ according to the rotation speed of the rotor 2 and also the pitch angle of the blade 2A is changed to the feathering position so as to apply the aerobraking force to the rotor 2 in addition to the braking force by the hydraulic pump 20. The torque $T_P$ corresponding to the rotation speed of the rotor 2 may be obtained by inputting a measured rotation speed $\omega$ of the rotor 2 in a known $T_P$-$\omega$ curve representing a relationship between the rotation speed $\omega$ of the rotor 2 and the torque $T_P$.

Further, in this embodiment, the "target angular position" is an angular position of the rotor 2 at which the first hole 10 matches the second hole 11. However, this is not limitative and the "target angular position" may be any desired angular position for stopping the rotor 2.

For instance, in the case of the wind turbine generator 1 having a heliport on top of the nacelle 8, there is an occasion when the rotor 2 is preferably stopped at the angular position where three blades 2A of the rotor 2 forms Y-shape to achieve easier access of the helicopter to the wind turbine generator 1. In this case, the "target angular position" is an angular position at which the three blades 2A of the rotor 2 form Y-shape.

Further, when performing the maintenance on the blade 2A (e.g. checking damages of the blade 2A), it is desirable to adjust the angular position of the rotor 2 so that the blade 2A is positioned, for instance, approximately horizontal or vertical. Furthermore, when attaching or detaching the blade 2A, it is desirable to adjust the angular position of the rotor 2 so that the blade 2A which is a work object is positioned, for instance, approximately horizontal or vertical. In these cases, the "target angular position" is an angular position at which the intended blade 2A is positioned along a certain direction (e.g. approximately horizontal or vertical).

Moreover, for the purpose of investigating influence of the wind turbine generator 1 on a nearby wind turbine generator belonging to the same wind farm, there may be an occasion when it is desirable to freely adjust the angular position of the rotor 2. For instance, for the purpose of investigating impact of the wake generated by the blade 2A of the wind turbine generator 1 on another wind turbine generator immediately behind the wind turbine generator 1, it may be desired to adjust the angular position of the rotor 2 of the wind turbine generator 1. In this case, the "target angular position" is an angular position appropriate for investigating the impact on said another wind turbine generator right behind the wind turbine generator 1.

[SECOND EMBODIMENT]

A wind turbine generator according to a second embodiment is described. The wind turbine generator of the second embodiment is similar to the wind turbine generator 1 of the first embodiment except that an additional valve is provided to cause the hydraulic pump 20 to perform a motoring operation. Configurations different from the above-described wind turbine generator 1 is mainly discussed and the same reference numerals are given without adding explanations for those configurations that are the same as the wind turbine generator 1.

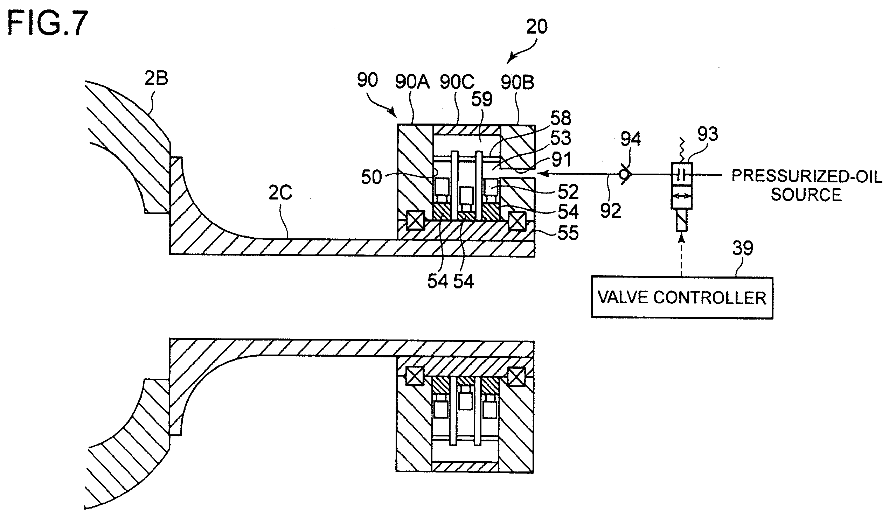

FIG.7 is an illustration of configurations of the hydraulic pump 20 having an additional valve for motoring operation. In the second embodiment, the hydraulic pump 20 is configured such that the cylinders 50, the pistons 52, the hydraulic chamber 52, the high pressure valve 56 and the low pressure valve 58 are housed in a casing 90. The high pressure valve 56 is, however, not shown in FIG.7. The casing 90 is constituted by: an end plate 90A forming an end face of the hydraulic pump 20 on a side nearer to the hub 2B; an end plate 90B forming an end face of the hydraulic pump 20 on a side farther from the hub 2B; and a cylindrical wall 90C arranged between the end plates (90A, 90B).

The hydraulic pump 20 illustrated in FIG. 7 is provided with multiply rows of the ring cams 54 (three arrays) in a longitudinal direction of the main shaft 2C, and corresponding pistons 52 and hydraulic chambers 53.

The end plate 90 on the side farther from the hub 2B is formed with a through-hole 91. The through-hole 91 constitutes a part of a supply path 92 for supplying the pressurized oil from an external pressurized oil source to the hydraulic pump 20 (i.e. the hydraulic chamber 53). The pressurized oil is supplied from the supply path 92 to the hydraulic chamber 53 corresponding to the ring cam (a rear-most ring cam) disposed farthest from the hub 2B among the multiple rows of the ring cams 54. In this manner, the pressurized oil is supplied to the hydraulic chamber 53 (the first working chamber from the right in FIG.7) corresponding to the rear-most ring cam 53 from the supply path 92 including the through-hole 91 formed in the end plate 90 on the side farther from the hub 2B. This is because, the hydraulic pump 20 is disposed at the farther end of the main shaft 2C from the hub 2B and it is easy to form the supply path 92 by utilizing a peripheral space of the end plate 90B.

In the supply path 92, a solenoid valve 93 of a normally-closed type, and a check valve 94 for allowing only the flow of the pressurized oil flowing toward the hydraulic chamber 53 from the pressurized oil source are provided. By exciting and opening the solenoid valve 93, the pressurized oil from the pressurized oil source flows through the check valve 94 and the through-hole 91 to the hydraulic chamber 53 in this order. Next, the pressurized oil pushes down the piston 52 to rotate the ring cam 54 and then is discharged to the low pressure oil line 26 via the low pressure valve 58 and the low pressure communication path 59.

From the perspective of utilizing the peripheral space of the end plate 90B, the solenoid valve 93 and the check valve 94 may be attached to an outer surface of the end plate 90B on the side farther from the hub 2B.

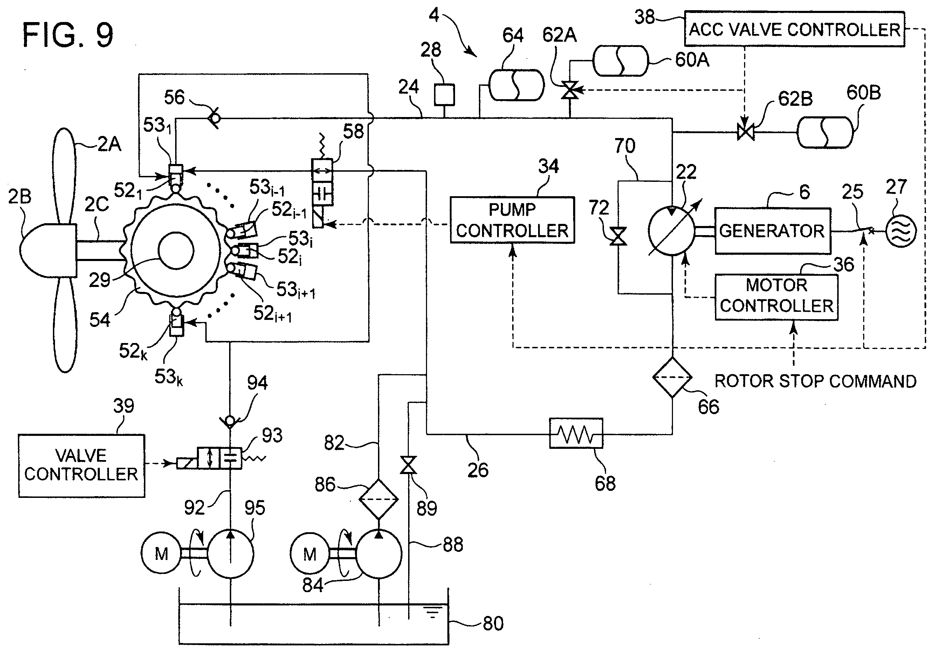

Further, the opening and closing of the solenoid valve 93 is controlled by a valve controller 39 and the opening and closing of the low pressure valve 58 is controlled by the pump controller 34 (see FIG.9). The timings of opening and closing the solenoid valve 93 and the low pressure valve 58 are controlled in a synchronized timing with the reciprocating motion cycle of the piston 52.

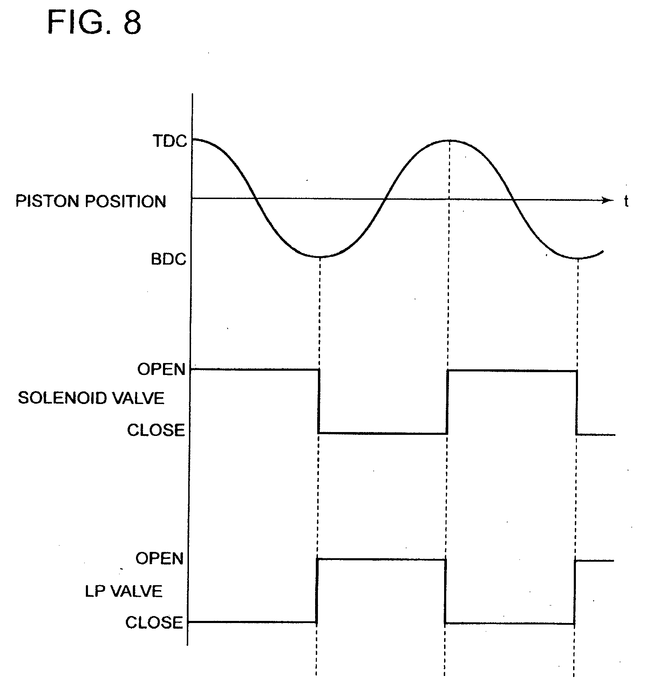

FIG.8 is a chart illustrating the opening/closing timings of the solenoid valve 93 and the low pressure valve 58.

As shown in FIG.8, the solenoid valve 93 is open and the low pressure valve 58 is closed while the piston 52 moves from the top dead center (TDC) to the bottom dead center (BDC). As a result, the pressurized oil is supplied to the hydraulic chamber 53 from the pressurized oil source and the piston 52 is pushed down by the pressurized oil, causing the ring cam 54 to rotate (the motor stroke).

On the other, while the piston 52 moves from BDC to TDC, the solenoid valve 93 is closed and the low pressure valve 58 is open. As a result, the pressurized oil having pushed down the piston 52 in the hydraulic chamber 53 is supplied to the low pressure oil line 26 via the low pressure valve 58 and the low pressure communication path 59.

The pressurized oil used for causing the hydraulic pump 20 to carry out the motoring operation, may be the operating oil circulating in the hydraulic transmission 4. In the case where the pressurized oil supplied to the hydraulic chamber 53 during the motoring operation is the operating oil circulating in the hydraulic transmission 4, this has no adverse affect on the hydraulic transmission 4.

FIG.9 is an illustration of a hydraulic circuit for causing the hydraulic pump 20 to carry out the motoring operation using the operating oil circulating in the hydraulic transmission 4.

In the hydraulic circuit of FIG.9, the supply path 92 is arranged between the oil tank 80 storing the low pressure oil and the hydraulic chambers $53_l$ and $53_k$. On an upstream side of the supply path 92 with respect to the solenoid valve 93, the pump 95 is provided as the "pressurized oil source". The operating oil pumped by the pump 85 from the oil tank 80 is supplied as the "pressurized oil" to the hydraulic chambers $53_l$ and $53_k$ via the solenoid valve 93 and the check valve 94.

FIG.9 depicts the case where in addition to the boost pump 84 for pumping up the operating oil from the oil tank 80 and supplying the operating oil to the low pressure oil line 26 via the replenishment line 82, the pump 95 is provided as the "pressurized oil source". However, this is not limitative and the boost pump 84 may also function as the "pressurized oil source"

For the purpose of preventing the pulsation and precisely controlling the displacement $D_P$, the hydraulic pump 20 is typically designed such that a plurality of the pistons 52 reciprocates in different cycles. Further, the hydraulic pump 20 is usually designed with more than one group of at least two pistons 52 having the same phase in the reciprocating motion cycle in order to prevent the pulsation and to maintain the precise control of the displacement. In this manner, even if one of the pistons 52 fails, other pistons 52 belonging to the same group as the failed piston 52 can continue operating. In the example shown in FIG.9, the shape of the ring cam 54 is determined so that the piston $52_l$ reciprocates with the same phase as the piston $52_k$ disposed on an opposite side of the ring cam 54 from the piston $52_l$. Similarly, the shape of the ring cam 54 is determined so that the piston $52_i$ reciprocates with the same phase as the piston $52_{i+k-l}$ disposed on an opposite side of the ring cam 54 from the piston $52_i$. Therefore, with two pistons $52_i$ and $52_{i+k-l}$ having the same phase of the reciprocating motion cycle, a redundancy is two.

Further, the solenoid valve 93 and the check valve 94 are shared by the two pistons $52_l$ and $52_{i+k-l}$ belonging to the same group. FIG.9 illustrates the case where the solenoid valve 93 and the check valve 94 are shared by the pistons $52_l$, $52_k$ belonging to the same group. In the synchronized timing with the movement of the ring cam 54, the opening/closing of the solenoid valve 93 is controlled so as to achieve the motoring operation of the hydraulic pump 20.

By sharing the solenoid valve 93 and the check valve 94 between the two pistons $52_i$, $52_{i+k-l}$, the number of the valves (93, 94) can be reduced.

FIG.9 only shows the supply path 92 arranged between the hydraulic chambers $53_l$ and $53_k$, but in reality, the supply path 92 is connected to the rest of the hydraulic chambers 53 as well. For instance, the supply path 92 may be connected to j hydraulic chambers 53 among all the hydraulic chambers $53_i$ (i=1 to m) corresponding to the rear-most ring cam 54. If the redundancy is n, there are j/n types in cycles in the pistons of the j hydraulic chambers 53. More specifically, there are j/n sets of pistons 52 that reciprocate in different cycles and thus, the solenoid valve 93 and the check valve 94 are provided for each of the j/n sets of the pistons 52.

Next, the rotor locking method for the wind turbine generator according this embodiment is explained.

Similarly to the first embodiment, in the second embodiment, the rotor 2 is stopped at the target angular position using the braking force by at least the hydraulic pump 20. The target angular position herein is the angular position where the first hole 10 matches the second hole 11.

However, when an aerodynamic torque is affected by wind speed change and suddenly changes, it is difficult to stop the rotor 2 at a desired angular position by adjusting the torque of the hydraulic pump 20. Moreover, after stopping the rotor 2 at the desired angular position, the rotor 2 may continue to move, causing misalignment afterward between the first hole 10 and the second hole 11.

Therefore, in this embodiment, after stopping the rotor 2 by applying the braking force by at least the hydraulic pump 20, the hydraulic pump 20 is driven by the pressurized oil from the pressurized oil source (the pump 95) to rotate the rotor 2 to the target angular position.

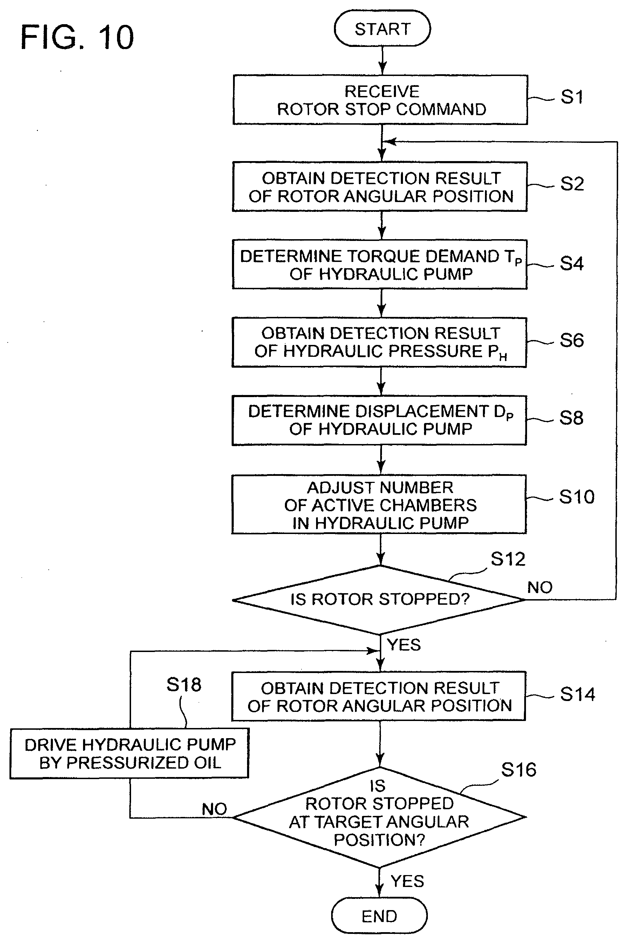

FIG.10 is a flow chart depicting the process of stopping the rotor 2 at the target angular position. The steps S2 through S12 are the same as those explained in the first embodiment in reference to FIG.6 and thus, are not further explained.

As shown in FIG.10, after the rotor 2 is stopped in accordance to the steps S2 to S12, a detection result of the angular position (rotation displacement) of the rotor 2 is obtained by the angular position detector 29 (step S14). Then, based on the detection result obtained by the angular position detector 29, it is determined whether or not the first hole 10 on the rotor side matches the second hole 11 on the nacelle side, i.e. whether or not the rotor 2 is stopped at the target angular position (step S16).

If it is determined that the rotor 2 is stopped at the target angular position (determined as YES in the step S16), the process moves to the insertion of the locking pin 9 without performing the driving operation of the hydraulic pump 20 by the pressurized oil. In the process, after the rotor 2 is temporarily locked at the desired angular position while maintaining the high pressure valve 56 and the low pressure valve 58 in a closed state, the locking pin 9 may be inserted.

On the other hand, if it is determined that the rotor 2 is not stopped at the target angular position (determined as NO in the step S16), the process advances to step S18 to drive the hydraulic pump 20 by the pressurized oil supplied from the pressurized oil source (the pump 95) so as to rotate the rotor 2. In this process, the rotor 2 may be rotated to the target angular position by controlling the opening and closing of the solenoid valve 93 and the low pressure valve 58 based on the measured angular position of the rotor 2 measured by the angular position detector 29. For instance, a period of time for controlling the opening and closing of the solenoid valve 93 and the low pressure valve 58 in synchronization with the timing of FIG.8 may be determined based on the difference between the current angular position and the desired annular position of the rotor 2. The number of the solenoid valves 93 and the low pressure valves 58 whose opening and closing is controlled in the timing shown in FIG.8 in synchronization with movement of the ring cam 54, may be determined based on the difference between the current angular position and the desired annular position of the rotor 2.

After rotating the rotor 2 by driving the hydraulic pump 20 in the step S18, the process returns to the step S14 and then to the step S16.

In this embodiment, after stopping the rotor 2 by the braking force by the hydraulic pump 20, the pressurized oil is supplied to the hydraulic pump 20 to drive the hydraulic pump 20 so as to rotate the rotor 2 to the desired angular position. Thus, the locking of the rotor 2 can be performed efficiently.

Further, based on the detection result by the angular position detector 29, the opening and closing of the solenoid valve 93 and the low pressure valve 58 are controlled and thus, the rotating of the rotor 2 to the desired angular position can be automated by driving the hydraulic pump 20. Thus, the locking of the rotor 2 can be performed efficiently.

In this embodiment, the solenoid valve 93 is provided for causing the hydraulic pump 20 to carry out the motoring operation, in addition to the high pressure valve 56 housed in the casing 90. This is for the following reasons.

In the cases illustrated in FIG.7 and FIG.9, the high pressure valve 56 and the low pressure valve 58 that are housed in the casing 90, are a check valve and an electromagnetic valve of a normally-open type, respectively. The check valve is used as the high pressure valve 56, resulting in reduced size of the high pressure valve 56. When driving the hydraulic pump 20 using the pressurized oil supplied from the pressurized oil source (the pump 95), the high pressure valve (the check valve) 56 housed in the casing 90 cannot be used. Thus, in this embodiment, an electromagnetic valve of a normally-closed type is provided as the solenoid valve 93 in addition to the high pressure valve 58.

Further, even in the case of using the electromagnetic valve as the high pressure valve 56, from the perspective of reducing the size of the high pressure valve 56, the high pressure valve 56 is designed to open and close by a pressure difference between the hydraulic chamber 53 and the high pressure oil line 24. By using the pressure difference between the hydraulic chamber 53 and the high pressure oil line 24 in this manner, the opening and closing of the high pressure valve 56 can be controlled with a small amount of electromagnetic force. Thus, it is possible to reduce the size of the high pressure valve 56. In this case, the high pressure valve 56 can not be opened or closed until using the pressure difference generated by the reciprocation of the pistons 52. In such case, when the hydraulic pump 20 is driven by the pressurized oil supplied from the pressurized oil source (the pump 95), the opening and closing of the high pressure valve 56 cannot be controlled on its own in some cases. Therefore, it is preferable to provide the solenoid valve 93 in addition to the high pressure valve 58 even in the case where the high pressure valve 56 housed in the casing is the electromagnetic valve.

Similarly to the first embodiment, in this embodiment, the aerobraking force may be applied to the hydraulic pump 20 in addition to the braking force by the hydraulic pump 20 when stopping the rotor 2 (SI to S12 of FIG.10).

In the case described in this embodiment, the "target angular position" is the angular position of the rotor 2 where the first hole 10 matches the second hole 11. However, this is not limitative and the "target angular position" may be any desired angular position for stopping the rotor 2.

[THIRD EMBODIMENT]

A wind turbine generator according to a third embodiment is described. The wind turbine generator of this embodiment is similar to the wind turbine generator 1 of the first embodiment except that a brake system for locking the rotor 2 and a turning device for turning the rotor 2 are provided. Therefore, configurations different from the above-described wind turbine generator 1 is mainly discussed and the same reference numerals are given without adding explanations for those configurations that are the same as the wind turbine generator 1.

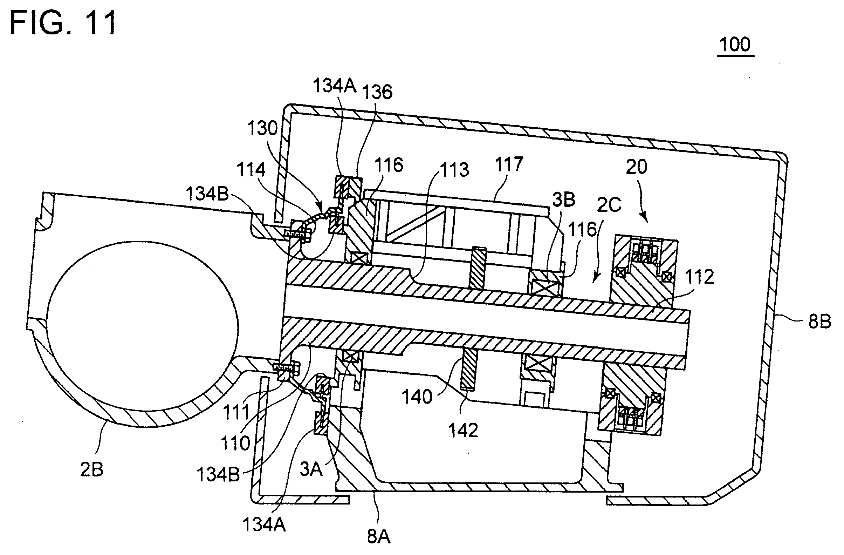

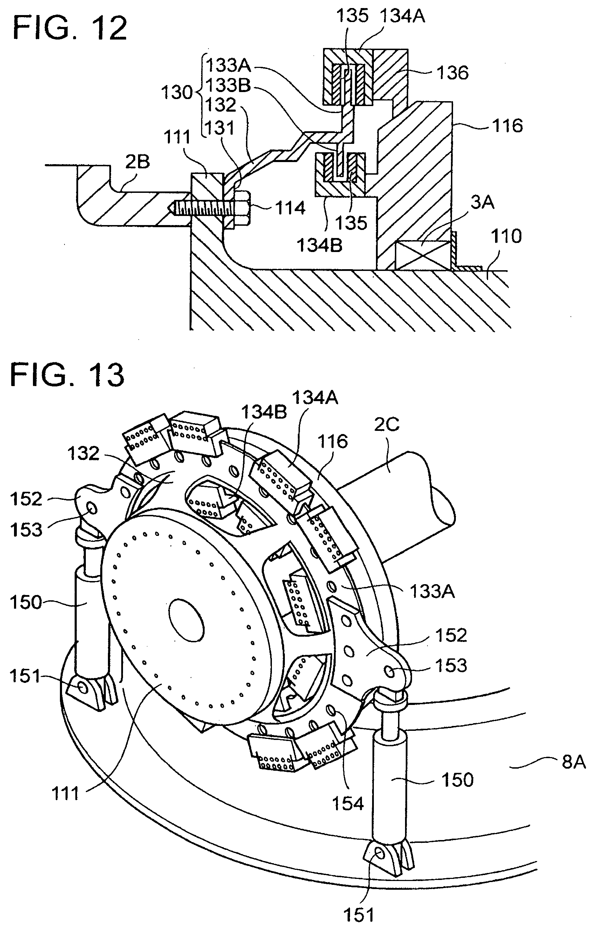

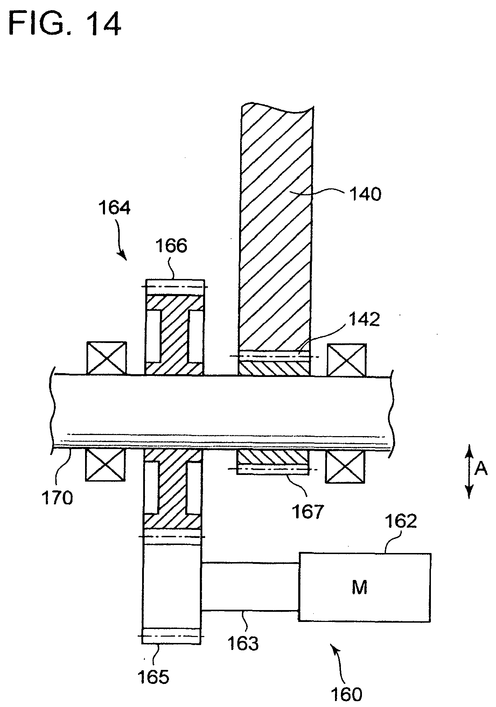

FIG.11 is a cross-sectional view of a configuration inside the nacelle 8 of a wind turbine generator 100 according to the third embodiment. FIG. 12 is an illustration of a detailed configuration around a brake disk. FIG.13 is an oblique perspective view of the main shaft and the brake disk taken from the hub side. FIG.14 is an illustration of a configuration of a geared motor.

In this embodiment, the rotor is locked 2 using the brake system described later, instead of or in addition to the locking pin 9 described in the first embodiment.

The main shaft 2C includes a front part 110 disposed nearer to the hub 2B and a rear part 112 disposed farther from the hub 2B as shown in FIG.11. A stepped portion 112 is provided between the front part 110 and the rear part 112 and the front part 110 has a larger diameter than the rear part 112.

In the example illustrated in FIG.11, a pair of main shaft bearings 3 (3A, 3B) for rotatably supporting the main shaft 2C are provided. More specifically, the front main shaft bearing 3A rotatably supports the front part 110 of the main shaft 2C and the rear main shaft bearing 3B rotatably supports the rear part 112 of the main shaft 2C. The main shaft bearings 3 (3A, 3B) are housed in bearing housings 116, respectively. From a perspective of improving strength against bending load and the like of the rotor 2, the bearing housings 116 are connected to each other by a connection frame 117 and the nacelle 8.

Each of the bearing housings 116 is supported by the nacelle 8. For instance, in the case where the nacelle 8 is formed by a nacelle baseplate 8A supported rotatably by the tower and a cover 8B for covering the nacelle baseplate 8A, each of the bearing housings 116 may be supported by the nacelle baseplate 8A or supported by the nacelle cover 8B.

The front part 110 of the main shaft 2C is configured so that a front end nearer to the hub 2B protrudes outward in the radial direction of the main shaft 2C to form a flange 111. The flange 111 of the front part 110 is fastened to the hub 2B by bolts 114. In this case, a brake disk 130 for locking the rotor 2 is fastened together with the flange 111 and the hub 2B.

The brake disk 130 includes, as shown in Fig.11 and Fig.12, a fastening-object part 131 fastened together with the hub 2B and the flange 111 by means of the bolts 114, a middle part 132 which bends and extends from the fastening object part 131 toward the bearing housing 116 of the main shaft bearing 3A, and a disk part 133 provided at an end of the middle part 132.

The fastening-object part 131 is formed into an annular shape extending in the radial direction of the main shaft 2C along the flange 111 of the main shaft 2C. The middle part 132 extends toward the bearing housing 116 of the main shaft bearing 3A while tapering outward in the radial direction of the main shaft 2C from a position where the flange 111 of the front part 110 and the hub 2B are fastened together (i.e. a position of the bolt 114). Further, at an end of the middle part 132 on the bearing housing 116 side, disk parts 133 (133A, 133B) are provided on the outer circumferential and inner circutnferenti.al sides, respectively. The outer disk part 133 on the outer circumferential side extends outwardly in the radial direction of the main shaft 2C. The inner disk part 133B on the inner circumferential side extends inward in the radial direction of the main shaft 2C.

In the brake disk 130 with the above configuration, the middle part 132 is provided tapering outward in the radial direction of the main shaft 2C from the fastening position where the flange 111 of the main shaft 2C and the hub 213 are fastened together. This increases a lever ratio, thereby making it possible to apply a larger braking force to the rotor 2. More specifically, by providing the middle part 132 tapering outward in the radial direction, a position of the brake disk 133 to which a frictional force is applied by a brake caliper 134 described later is moved farther outward in the radial direction from a shaft center of the main shaft 2C. As a result, even with a small frictional force by the brake caliper 134, a large braking force is applied to the rotor 2.

Further, by providing the middle part 132 extending toward the bearing housing 116 of the main shaft bearing 3A from the fastening position where the middle part 132 is fastened together with the hub 2B and the main shaft 2C, the position of the brake disk 133 to which the frictional force is applied by the brake caliper 134 is moved closer to the main shaft bearing 3A which is a supporting point of the main shaft bearing 2C. More specifically, this decreases the distance between the disk part and the main shaft bearing 3A in the axial direction of the main shaft 2C. As a result, even when the net force of the frictional forces of all of the brake calipers 134 has a radial component, it is possible to reduce a moment load acting on the main shaft 2C caused by the radial component of the net friction force.

The brake caliper 134 (134A, 134B) is provided to straddle the disk part 133 (133A, 133B) as shown in FIG. 12, FIG. 13. The brake disk caliper 134 includes; a plurality of outer calipers 134A provided in correspondence to the disk part 133A on the outer circumferential side of the brake disk 130; and a plurality of inner calipers 134B provided in correspondence to the disk part. 133B on the inner circumferential side of the brake disk 130.

As described above, the plurality of brake calipers 134 (the outer calipers 134A and the inner calipers 134B) are provided on each of the outer circumferential side and the inner circumferential side of the brake disk 130. Thus, sufficient braking force is applied to the rotor 2.

Each of the brake calipers 134 (134A, 134B) is configured to press a brake pad 135 against the disk part 133 (133A, 133B) of the brake disk using a hydraulic pressure so as to apply the braking force to the rotor 2. The brake caliper 134 is directly or indirectly supported by the bearing housing 116 of the font main shaft bearing 3A or by the nacelle baseplate 8A.

As illustrated in FIG.11, a turning disk 140 for turning is attached to the main shaft 2C. On an outer periphery of the turning disk 140, a gear 142 is formed. This turning disk 140 is configured rotatable using a geared motor 160 shown in FIG. 14. By this, the rotor 2 having been temporarily stopped is rotated to the target angular position.

The geared motor 160 includes an electric motor 162 and a reducer 164. The reducer 164 is formed by a first gear 165, a second gear 166 and a third gear 167. The first gear 165 of the reducer 164 is attached to an output shaft of the electric motor 162. The second gear 166 of the reducer 164 is attached to a rotation shaft 170 and meshes with the first gear 165. The third gear 167 of the reducer is attached to the rotation shaft 170 and meshes with a gear 142 of the turning disk 140.

The torque outputted from the electric motor 162 is increased by the first gear 165, the second gear 166 and the third gear 167 and then inputted to the turning disk 140.

The rotation shaft 170 and the second gear 166 and the third gear 167 that are attached to the rotation shaft are configured movable in a direction indicated by an arrow A in FIG.14. As a result, the third gear 167 of the geared motor 160 can be disengaged from the gear 142 of the turning disk 140, the third gear 167 of the geared motor 160 can mesh with the gear 142 of the turning disk 140, and the like.

Therefore, when performing a turning operation of the rotor 2, the third gear 167 of the geared motor 160 meshes with the gear 142 of the turning disk 140 so as to transmit the torque of the electric motor 162 to the turning disk 140. For the rest of the time, the third gear 167 of the geared motor 160 is removed and disengaged from the gear 142 of the turning disk 140.

Further, the third gear 167 of the geared motor 160 may be disengaged from the gear 142 of the turning disk 140 in accordance with a command from remote location.

Furthermore, more than one geared motor 160 may be provided for the turning disk 140. As a result, a large torque can be inputted to the turning disk 140.

Next, a rotor locking method for a wind turbine generator according to the present embodiment is described.

Similarly to the first embodiment, the rotor 2 is stopped by applying the braking force by at least the hydraulic pump 20. Then, the rotor 2 is locked using a brake system illustrated in FIG. 11 through Fig.13.

However, when an aerodynamic torque is affected by wind speed change and suddenly changes, it is difficult to stop the rotor 2 at a desired angular position by adjusting the torque of the hydraulic pump 20. Moreover, after stopping the rotor 2 at the desired angular position, the rotor 2 may continue to move, causing misalignment from the target angular position afterward.

Therefore, in this embodiment, after stopping the rotor 2 by applying the braking force by at least the hydraulic pump 20, the hydraulic pump 20 is rotated to the target angular position using the geared motor 160 or the pitch drive system 40.

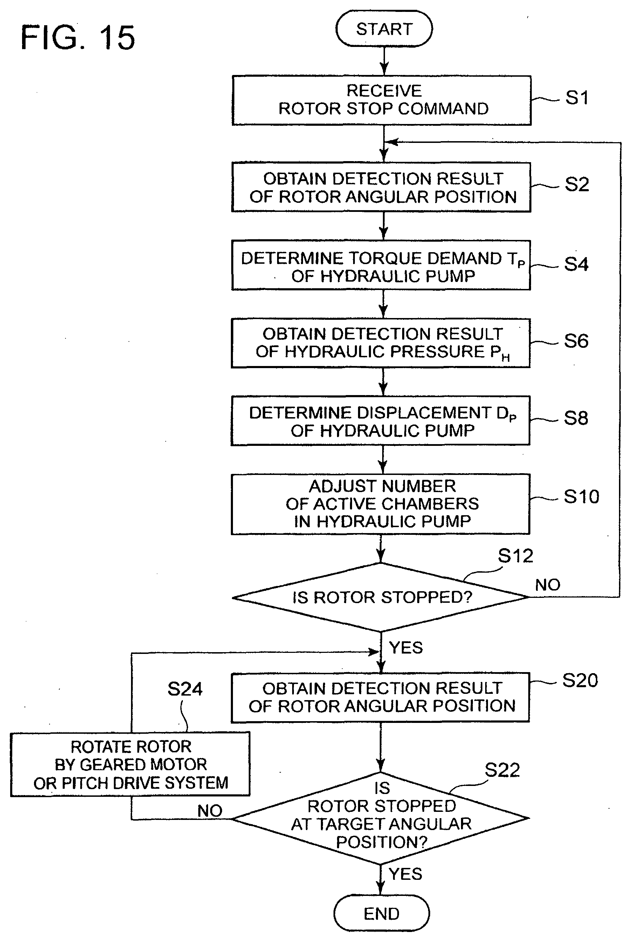

FIG.15 is a flow chart depicting the process of stopping the rotor 2 at the target angular position. The steps S1 through S12 are the same as those explained in the first embodiment in reference to FIG.6 and thus, are not further explained.

As shown in FIG. 1.5, after the rotor 2 is stopped in accordance to the steps S1 to S12, a result of measuring the angular position (rotation displacement) of the rotor 2 is obtained by the angular position detector 29 (step S20). Then, based on the detection result by the angular position detector 29, it is determined whether or not the rotor 2 is stopped at the target angular position (step S22).

If it is determined that the rotor 2 is stopped at the target angular position (determined as YES in the step S22), the process advances to a locking operation of the rotor 2 by means of the brake caliper 134 and the brake disk 130 without performing a turning operation of the rotor 2 by means of the geared motor 160 or the pitch drive system 40. In this process, after the rotor 2 is temporarily locked at the desired angular position while maintaining the high pressure valve 56 and the low pressure valve 58 in a closed state, the locking operation of the rotor 2 may be performed using the brake caliper 134 and the brake disk 130.

On the other hand, if it is determined that the rotor 2 is not stopped at the target angular position (determined as NO in the step S22), the process advances to step S24 to perform the turning operation of the rotor by means of the geared motor or the pitch drive system 40.

More specifically, when the wind speed exceeds a threshold value, the turning operation of the rotor 2 is performed by adjusting the pitch angle of the blade 2A by means of the pitch drive system 40. In contrast, when the wind speed is below the threshold value, the turning operation of the rotor 2 is performed by means of the geared motor 160.

If the geared motor 160 is designed on the assumption of its use in a high wind speed area, the geared motor 160 needs to be large-scale to generate torque large enough to counteract a strong force of the wind. In view of this, when the wind speed exceeds the threshold value, the pitch control is used instead of the geared motor 160 and aerodynamic torque is applied to the rotor 2 to perform the turning operation. In this manner, it is possible to avoid size increase of the geared motor 160.

Particularly, in the wind turbine generator using the hydraulic transmission 4, it is inevitable that the geared motor 160 is attached to the main shaft 2C disposed between the hub 2B and the hydraulic pump 20 and its size is increased to generate large torque. In view of this, by using both the pitch drive system 40 and the geared motor 160 as described above, it is extremely beneficial to avoid size increase of the geared motor 160.

After- performing the turning operation of the rotor 2 using the geared motor 160 or the pitch drive system 40 in the step S24, the process returns to the step S22 to perform the determination of the step S22.

In this embodiment, after stopping the rotor 2 by the braking force by at least the hydraulic pump 20, the turning operation of the rotor 2 is performed by means of the geared motor 160 or the pitch drive system 40. Thus, the rotor can be rotated to the target angular position.

Further, in this embodiment, the rotor 2 is turned by the geared motor 160 or the pitch drive system 40. However, this is not limitative and the rotor 2 may be rotated using the hydraulic cylinder. For instance, as shown in FIG.13, the hydraulic cylinders may be attached to the brake disk 130 so as to perform the turning operation of the rotor 2 by means of the hydraulic cylinders.

More specifically, as illustrated in FIG. 13, the hydraulic cylinder 150 may be attached to the brake disk 130 via a bracket 152. The hydraulic cylinder 150 is installed in a standing manner on the nacelle baseplate 8A. The hydraulic cylinder 150 is fixed to the nacelle baseplate at one end is attached to the brake disk 130 via the bracket 152 at the other end. The bracket 152 is fastened to the brake disk 130 using a plurality of attachment holes 154 formed over an entire circumference of the outer disk part 133A of the brake disk 130. Further, the bracket 152 is attached to the outer disk part 133A in an area where the outer calipers 134A are not provided.

The hydraulic cylinder 150 is attached rotatably to the nacelle baseplate 8A at a connection part 151 and to the bracket 152 at a connection part 53. The hydraulic cylinder 150 is configured to rotate around these connection parts 151, 153 in accordance with a rotation amount of the brake disk 130.

By attaching the hydraulic cylinder 150 to the brake disk 130 in this manner, when the hydraulic cylinder 150 changes its stroke by reciprocating the piston, the rotor 2 rotates with the brake disk 130. As a result, the turning operation of the rotor 2 is performed. Further, the brake disk 130 (i.e. the outer disk part 133A) has relatively large diameter and thus the rotor 2 can be easily rotated even when the load of the rotor 2 becomes unbalanced during a removing operation of the blade 2A or the like,

Further, a pair of the hydraulic cylinders 150 may be provided at both sides of the brake disk 130, respectively. In this case, the brake disk 130 is turned by moving the pair of the hydraulic cylinders 150 in directions opposite to each other. More specifically, one of the hydraulic cylinders 150 applies an upward pressing force in the vertical direction to the braking disk 130, whereas the other of the hydraulic cylinders 150 applies a downward pressing force in the vertical direction to the braking disk 130. Thus, the pressing forces by the hydraulic cylinders 150 cancel majority of the radial component each other. Therefore, it is possible to reduce the moment load on the main shaft 2C caused by the radial component of the main shaft 2C which is the net force of the pressing force by the hydraulic cylinders 150.

Similarly to the first embodiment, in this embodiment, the aerodynamic force may be applied to the rotor 2 in addition to the braking force by the hydraulic pump when stopping the rotor 2 (S1 to S12 of FIG. 10).

Moreover, in this embodiment, conditions regarding a direction of the nacelle 8 with respect to the predominant wind direction when stopping rotation of the rotor 2 are not described. However, to avoid size increase of the brake system, the direction of the nacelle 8 with respect to the predominant wind direction during emergency may be regulated to a predetermine range (e.g. 90 $\pm$ 45 degrees).

The wind turbine generator 1. is designed with a torque of the brake system (the brake disk 130 and the brake caliper 134) higher than a certain value so as to be able to maintain the rotor 2 in a stopped state even when a strong wind blows. More specifically, during an emergency such as when a rescue aircraft approaches the wind turbine generator 1 to rescue an operator in the wind turbine generator 1, it is required to maintain the rotor 2 in the stopped state even when a strong wind of significantly high instantaneous wind speed (e.g. 35 m/s) blows. However, the brake system designed to handle such high instantaneous wind speed is inevitably large scale, resulting in weight gain of the brake system.

Thus, by limiting the direction of the nacelle 8 with respect to the predominant wind direction to 90 $\pm$ 45 degrees during emergency, smaller torque is needed to maintain the rotor 2 in the stopped state at the extremely high instantaneous wind speed (e.g. 35 m/s) and thus it is possible to avoid size increase of the brake system.

While the present invention has been described with reference to exemplary embodiments, it is obvious to those skilled in the art that various changes may be made without departing from the scope of the invention.

For instance, in the first and second embodiments, the rotor 2 is locker by inserting the rocking pin 9 in the first hole 10 on the rotor 2 side and the second hole 11 on the nacelle 8 side and in the third embodiment, the rotor 2 is locked using the brake disk 130 and the brake caliper 134. However, this is not limitative and any locking means besides the above means may be used.

Further, in the first to third embodiments, the displacement of the hydraulic pump 20, DP is changed when stopping the rotor 2 using the braking force by the hydraulic pump 20 (see the step S8). However, this is not limitative and instead of or in addition to the displacement Dp, the pressure of the operating oil, $P_H$ in the high pressure oil line 24 may be changed. More specifically, at least one of the displacement $D_P$ or the pressure of the operating oil, $P_H$ may be adjusted to achieve the torque demand $T_P$ (= $D_P \times P_H$) of the hydraulic pump determined in the step S4.

Furthermore, the pressure of the operating oil in the high pressure oil line 24, $P_H$ is adjustable, for instance, by increasing or decreasing the discharge amount of the operating oil from the hydraulic pump 20, $Q_P$ with respect to an intake amount of the operating oil to the hydraulic motor 22, $Q_M$.

Moreover, in the first and second embodiments, the locking pin 9 is manually inserted into the first hole 10 and the second hole 11. However, the inserting operation of the locking pin 9 may be automated.

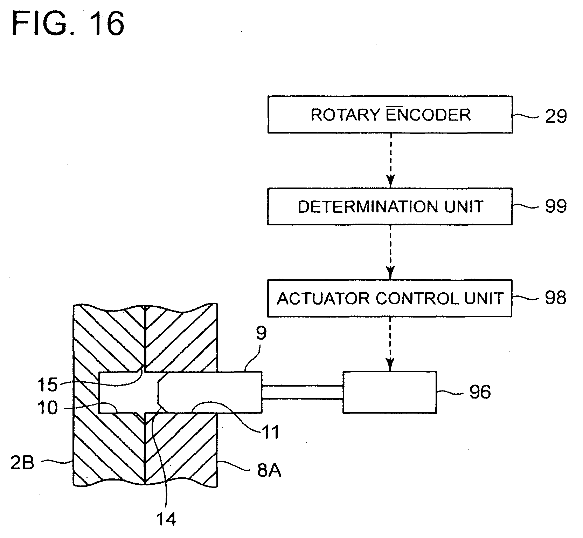

FIG.16 illustrated an automated insertion of the locking pin 9. As shown in the drawing, an actuator 96 is attached to a rear end side of the locking pin 9. The actuator 96 is controlled by an actuator control unit 98. Further, in a determination unit 99, it is determined whether or not the first hole 10 on the rotor 2 side (the hub 2B in the case illustrates in FIG.16) matches the second hole 11 on the nacelle 8 side (the projection 8A of the nacelle 8 in the case illustrated in FIG.16) based on a detection result obtained by the angular position detector 29 (see FIG.1. FIG.9). Then, a determination result obtained by the determination unit 9 is sent to the actuator control unit 98. In the case where it is determined by the determination unit 99 that the first hole 10 matches the second hole 11, the actuator control unit, 98 actuates the actuator 96 to insert the locking pin 9 into the first hole 10 and the second hole 11. Further, a hydraulic cylinder may be used as the actuator 96, for instance.

[Reference Numerals]

| | |
|---|---|
| 1 | WIND TURBINE GENERATOR |
| 2 | ROTOR |
| 2A | BLADE |
| 2B | HUB |
| 2C | MAIN SHAFT |
| 3 | MAIN SHAFT BEARING |
| 4 | HYDRAULIC TRANSMISSION |
| 5 | FASTENING MEMBER |
| 6 | GENERATOR |
| 7 | TOWER |
| 8 | NACELLE |
| 8A | PROJECTION |
| 9 | LOCKING PIN |
| 10 | FIRST HOLE |
| 11 | SECOND HOLE |
| 12 | CYLINDRICAL MEMBER |
| 13 | SCREW MEMBER |
| 14 | CORNER PORTION |
| 15 | CORONER PORTION |
| 20 | HYDRUALIC PUMP |
| 22 | HYDRAULIC MOTOR |
| 24 | HIGH PRESSURE OIL DYNE |
| 26 | LOW PRESSURE OIL LINE |
| 28 | PRESSURE SENSOR |
| 29 | ROTARY ENCODER |
| 30 | CONTROL UNIT |
| 32 | PITCH CONTROLLER |
| 34 | PUMP CONTROLLER |
| 36 | MOTOR CONTROLLER |
| 38 | ACC VALVE CONTROLLER |
| 39 | VALVE CONTROLLER |
| 40 | PITCH DRIVE SYSTEM |
| 42 | HYDRAULIC CYLINDER |
| 44 | SERVO VALVE |
| 46 | PRESSURIZED-OIL SOURCE |
| 48 | ACCUMULATOR |
| 50 | CYLINDER |
| 52 | PISTON |
| 52A | PISTON BODY |

| 52B | PISTON ROLLER |
|---|---|
| 53 | HYDRAULIC CHAMBER |
| 54 | CAM (RING CAM) |
| 55 | CAM MOUNT |
| 56 | HIGH PRESSURE VALVE |
| 57 | HIGH PRESSURE COMMUNICATION PATH |
| 58 | LOW PRESSURE VALVE |
| 59 | LOW PRESSURE COMMUNICATION PATH |
| 60 (60A, 60B) | ACCUMULATOR |
| 62 (62A, G213) | ACCUMULATOR VALVE |
| 64 | ACCUMULATOR |
| 66 | OIL FILTER |
| 68 | OIL COOLER |
| 70 | BYPASS FLOW PATH |
| 72 | RELIEF VALVE |
| 80 | OIL TANK |
| 82 | REPLENISHING LINE |
| 84 | PUMP |
| 86 | OIL FILTER |
| 88 | RETURN LINE |
| 89 | RELIEF VALVE |
| 90 | CASING |
| 90A | END PLATE |
| 90B | END PLATE |
| 90C | CYLINDRICAL WALL |
| 91 | THROUGH, HOLE |
| 92 | SUPPLY PATH (SUPPLY PATH FOR PRESSURIZED OIL) |
| 93 | SOLENOID VALVE (VALVE) |
| 94 | CHECK VALVE (VALVE) |
| 96 | ACTUATOR |
| 98 | ACTUATOR CONTROL UNIT |
| 99 | DETERMINATION UNIT |
| 130 | BRAKE DISK |
| 134 | BRAZE CALIPER |
| 140 | TURNING DISK |
| 160 | GEARED MOTOR |

**Claims**

1. A rotor locking method for a power generating apparatus of a renewable energy type which comprises: a rotor (2) including a hub (2B) to which a blade (2A) is mounted and a main shaft (2C) connected to the hub (2B); a hydraulic pump (20) configured to be driven by rotation of the rotor; a hydraulic motor (22) configured to be driven by operating oil pressurized by the hydraulic pump (20); and a generator (6) connected to the hydraulic motor (22), the method comprising the steps of:

   stopping the rotor (2) by applying a braking force by at least the hydraulic pump (20) to the rotor (2); and
   after the step of stopping the rotor (2), locking the rotor (2) so as to immobilize the rotor (2) in a rotational direction; and
   after the step of stopping the rotor (2) and before the step of locking the rotor (2), rotating the rotor (2) to a target angular position

   wherein, in the step of stopping the rotor (2), torque of the hydraulic pump (20) is changed so as to adjust the braking force, and wherein
   in the step of rotating the rotor (2), the hydraulic pump (20) is driven by pressurized oil supplied to the hydraulic pump (20) so as to rotate the rotor (2) to the target angular position.

2. The rotor locking method according to claim 1, wherein

the power generating apparatus of the renewable energy type further comprises an angular position detector (29) for detecting an angular position of the rotor (2), and

in the step of stopping the rotor (2), the torque of the hydraulic pump (20) is adjusted based on a detection result obtained by the angular position detector (29) so as to stop the rotor (2) at a target angular position.

3.  The rotor locking method according to claim 2, wherein
    the target angular position is a position where a first hole (10) formed on a rotor side matches a second hole (11) formed on a nacelle side for housing the main shaft (2C), and
    in the step of locking the rotor (2), a locking pin (9) is inserted in the first hole on the rotor side and the second hole on the nacelle side.

4.  The rotor locking method according to claim 1, wherein
    in the step of locking the rotor (2), a brake pad (135) is pressed against a brake disk (130) attached to the rotor (2).

5.  The rotor locking method according to claim 1, wherein
    the power generating apparatus of the renewable energy type further comprises an angular position detector (29) for detecting an angular position of the rotor (2), and
    in the step of rotating the rotor (2), opening and closing of a valve (56) provided in a supply path for supplying the pressurized oil to the hydraulic pump (20) is controlled based on a detection result obtained by the angular position detector (29) so as to rotate the rotor (2) to the target angular position.

6.  The rotor locking method according to claim 1, wherein
    the power generating apparatus of the renewable energy type further comprises a high pressure oil line (54) for supplying the operating oil from the hydraulic pump (20) to the hydraulic motor (22) and a low pressure oil line (26) for returning the operating oil from the hydraulic motor (22) to the hydraulic pump (20),
    the hydraulic pump (20) comprises:

    a cylinder (50);
    a piston slidable (52A) in the cylinder in response to rotation of the rotor (2);
    a hydraulic chamber (53) formed by the cylinder (50) and the piston (52A);
    a high pressure valve (56) for opening and closing a communication path (57) between the hydraulic chamber (53) and the high pressure oil line (24); and
    a low pressure valve (58) for opening and closing a communication path (59) between the hydraulic chamber (50) and the low pressure oil line (26), and

    the rotor locking method further comprises a step of:

    after the step of stopping the rotor (2) and before the step of locking the rotor (2), temporarily locking the rotor (2) by maintaining such a state that the high pressure valve (56) and the low pressure valve (58) are closed.

7.  The rotor locking method according to claim 1, wherein
    in the step of stopping the rotor (2), the torque of the hydraulic pump (20) is adjusted to a torque demand value in accordance with a rotation speed of the rotor (2) and a pitch angle of the blade (2A) is changed toward a feathering position so as to apply a force of aerobraking to the rotor (2) in addition to the braking force applied by the hydraulic pump (20).

8.  The rotor locking method according to claim 1, wherein
    the power generating apparatus of the renewable energy type further comprises a circuit breaker (25) for changing a connection state between the generator (6) and a grid, and
    the rotor locking method further comprises steps of:

    when output of the generator (6) becomes not greater than a threshold value upon stopping of the rotor (2), disconnecting the generator (6) from the grid by opening the circuit breaker (25); and
    immediately before the step of disconnecting the generator (6), making the hydraulic motor (20) into an idle state.

9.  The rotor locking method according to claim 1, wherein
    the power generating apparatus of the renewable energy type further comprises a high pressure oil line (24) for supplying the operating oil from the hydraulic pump (20) to the hydraulic motor (22),

an accumulator (48; 60) is connected to the high pressure oil line (24), and
in the step of stopping the rotor (2), at least displacement of the hydraulic pump (20) is increased so as to reserve in the accumulator (60) excess operating oil that is excess in the high pressure oil line (24).

10. The rotor locking method according to claim 1, wherein
the power generating apparatus of the renewable energy type further comprises a high pressure oil line (24) for supplying the operating oil from the hydraulic pump (20) to the hydraulic motor (22), and
in the step of stopping the rotor (2), at least displacement of the hydraulic pump (20) is increased, and displacement of the hydraulic motor (22) is temporarily increased so as to absorb excess operating oil in the high pressure oil line (24) by means of the hydraulic motor (22).

11. The rotor locking method according to claim 1, wherein
the power generating apparatus of the renewable energy type further comprises a high pressure oil line (24) for supplying the operating oil from the hydraulic pump (20) to the hydraulic motor (22), a low pressure oil line (26) for returning the operating oil from the hydraulic motor (22) to the hydraulic pump (20), a bypass flow path (70) connected to the high pressure oil line (24) and the low pressure oil line (26) for bypassing the hydraulic motor (22), and a relief valve (72) provided in the bypass flow path, and
in the step of stopping the rotor (2), at least displacement of the hydraulic pump (20) is increased so as to cause excess operating oil in the high pressure oil line (24) to be released to the low pressure oil line (26) via the bypass flow path (70) and the relief valve (72).

12. The rotor locking method according to claim 1, further comprising a step of:

supplying a rotor stop command to the power generating apparatus of the renewable energy type from a remote site,
wherein the step of stopping the rotor is performed automatically based on the rotor stop command.

13. The rotor locking method according to claim 1, wherein
the power generating apparatus of the renewable energy type is a wind turbine generator configured such that the rotor (2) is rotated by wind in a form of renewable energy, torque of the rotor (2) is inputted to the generator (6) via the hydraulic pump (20) and the hydraulic motor (22) and electric power is generated in the generator (6).

14. A power generating apparatus of a renewable energy type, comprising:

a rotor (2) including a blade (2A), a hub (2B) to which the blade (2A) is mounted and a main shaft (2C) connected to the hub (2B);
a hydraulic pump (20) configured to be driven by rotation of the rotor (2);
a hydraulic motor (22) configured to be driven by operating oil pressurized by the hydraulic pump (22);
a generator (6) connected to the hydraulic motor (22); the power generating apparatus further comprising:
a rotor-stop control unit (30) for stopping the rotor (2) by applying a braking force by at least the hydraulic pump (20) to the rotor (2); and
a locking device (9) for locking the rotor (2) so as to immobilize the rotor (2) in a rotational direction;
an angular position detector (29) for detecting an angular position of the rotor (2);
an oil source (46) for supplying pressurized oil to the hydraulic pump (20);
a valve (56) provided in a supply path through which the pressurized oil is supplied to the hydraulic pump (20) from the oil source (46); and
a valve controller (39) for controlling opening and closing of the valve (93) based on a detection result obtained by the angular position detector (29) so as to drive the hydraulic pump (20) by the pressurized oil from the oil source (24) and rotate the rotor (2) to a target angular position.

wherein the rotor-stop control unit (30) changes torque of the hydraulic pump (20) to change the braking force.

15. The power generating apparatus of the renewable energy type according to claim 14, further comprising:

an angular position detector (29) for detecting an angular position of the rotor (2),
wherein the rotor-stop control unit (30) is configured to adjust the torque of the hydraulic pump (20) based on a detection result obtained by the angular position detector (29) so as to stop the rotor (2) at a target angular position.

**16.** The power generating apparatus of the renewable energy type according to claim 14, further comprising:

a high pressure oil line (24) for supplying the operating oil from the hydraulic pump (20) to the hydraulic motor (22); and

a low pressure oil line (26) for returning the operating oil from the hydraulic motor (22) to the hydraulic pump (20),

wherein the hydraulic pump (20) comprises:

a cylinder (50);

a piston slidable (52A) in the cylinder (50) in response to rotation of the rotor (2);

a hydraulic chamber (53) formed by the cylinder (50) and the piston (52A);

a high pressure valve (56) for opening and closing a communication path (57) between the hydraulic chamber (53) and the high pressure oil line (24);

a low pressure valve (58) for opening and closing a communication path (59) between the hydraulic chamber (53) and the low pressure oil line (26); and

a casing (90) for housing the cylinder (50), the piston (52A), the hydraulic chamber (53), the high pressure valve (56) and the low pressure valve (58),

wherein the supply path (92) penetrates the casing (90) from the oil source and communicates with the hydraulic chamber (53), and

wherein the valve (93) is a solenoid valve provided in the supply path (92) for the pressurized oil.

**17.** The power generating apparatus of the renewable energy type according to claim 16, wherein
the hydraulic pump (20) further comprises a ring cam (54) having wave-shaped lobes (54A, 54B) for determining a reciprocating motion cycle of the piston (52A),
the hydraulic pump (20) has a plurality of groups each of which is formed by at least two of the pistons (52A) having the same phase of the reciprocating motion cycle, and
the valve (93) is commonly provided for the at least two of the pistons (52A) belonging to each of the groups.

**18.** The power generating apparatus of the renewable energy type according to claim 14, wherein
the locking device (9) is a locking pin insertable in a first hole (10) formed on a rotor side and a second hole (11) formed on a nacelle side for housing the main shaft (2C),
the hydraulic pump (20) comprises a plurality of cylinders (50), a plurality of pistons (52A) being slidable in the plurality of cylinders (50), respectively, and a ring cam (54) provided on an outer circumference of the main shaft (2C) and having wave-shaped lobes (54A, 54B) for determining a reciprocating motion cycle of the plurality of pistons (52A), and
a shape of the ring cam (54) is determined so that the first hole (10) matches the second hole (11) when at least one of the pistons (52A) is at a root (54A) of the lobes of the ring cam (54).

**19.** The power generating apparatus of the renewable energy type according to claim 14, wherein
the locking device (9) is a locking pin insertable in a first hole (10) formed on a rotor side and a second hole (11) formed on a nacelle side for housing the main shaft (2C), and
the power generating apparatus of the renewable energy type further comprises:

an angular position detector (29) for detecting an angular position of the rotor (2);

an actuator (96) attached to the locking pin (9);

a determination unit (99) for determining whether or not the first hole (10) matches the second hole (11) based on a detection result obtained by the angular position detector (29); and

an actuator control unit (98) for causing the actuator (96) to insert the locking pin (9) in the first hole (10) and the second hole (11) when it is determined that the first hole (10) matches the second hole (11).

**20.** The power generating apparatus of the renewable energy type according to claim 14, wherein
the locking device (9) is a locking pin insertable in a first hole (10) formed on a rotor side and a second hole (11) formed on a nacelle side for housing the main shaft (2C), and
a tip surface (14) of the locking pin (9) and an opening end surface (15) of at least one of the first hole (10) or the second hole (11) opposite to a direction of inserting the locking pin (9) are chamfered.

**Patentansprüche**

1. Rotorarretierverfahren für eine Stromerzeugungsvorrichtung vom Typ erneuerbare Energie, die einen Rotor (2), der eine Nabe (2B), woran ein Blatt (2A) angebracht ist, und eine Hauptwelle (2C), die mit der Nabe (2B) verbunden ist, aufweist, eine Hydraulikpumpe (20), die dazu ausgebildet ist, durch eine Drehung des Rotors angetrieben zu werden, einen Hydraulikmotor (22), der dazu ausgebildet ist, durch Betriebsöl, das durch die Hydraulikpumpe (20) mit Druck beaufschlagt wird, angetrieben zu werden, und einen Generator (6), der mit dem Hydraulikmotor (22) verbunden ist, umfasst, wobei das Verfahren die Schritte umfasst:

   Anhalten des Rotors (2) durch Ausüben einer Bremskraft durch wenigstens die Hydraulikpumpe (20) auf den Rotor (2) und,
   nach dem Schritt des Anhaltens des Rotors (2), derartiges Arretieren des Rotors (2), dass der Rotor (2) in einer Umdrehungsrichtung unbeweglich gemacht wird, und
   nach dem Schritt des Anhaltens des Rotors (2) und vor dem Schritt des Arretierens des Rotors (2), Drehen des Rotors (2) in eine Zielwinkelposition,
   wobei bei dem Schritt des Anhaltens des Rotors (2) das Drehmoment der Hydraulikpumpe (20) so verändert wird, dass die Bremskraft reguliert wird, und wobei
   bei dem Schritt des Drehens des Rotors (2) die Hydraulikpumpe (20) durch unter Druck stehendes Öl, das der Hydraulikpumpe (20) geliefert wird, so angetrieben wird, dass der Rotor (2) in die Zielwinkelposition gedreht wird.

2. Rotorarretierverfahren nach Anspruch 1, wobei
   die Stromerzeugungsvorrichtung vom Typ erneuerbare Energie ferner einen Winkelpositionsdetektor (29) zum Detektieren einer Winkelposition des Rotors (2) umfasst, und
   bei dem Schritt des Anhaltens des Rotors (2) das Drehmoment der Hydraulikpumpe (20) auf Basis eines Detektionsergebnisses, das durch den Winkelpositionsdetektor (29) erhalten wird, so reguliert wird, dass der Rotor (2) an einer Zielwinkelposition angehalten wird.

3. Rotorarretierverfahren nach Anspruch 2, wobei
   die Zielwinkelposition eine Position ist, in der ein erstes Loch (10), das auf Seiten des Rotors gebildet ist, mit einem zweiten Loch (11), das auf Seiten eines Rumpfs zur Aufnahme der Hauptwelle (2C) gebildet ist, übereinstimmt, und
   bei dem Schritt des Arretierens des Rotors (2) ein Arretierstift (9) in das erste Loch auf Seiten des Rotors und das zweite Loch auf Seiten des Rumpfs eingesetzt wird.

4. Rotorarretierverfahren nach Anspruch 1, wobei
   bei dem Schritt des Arretierens des Rotors (2) ein Bremsklotz (135) gegen eine Bremsscheibe (130), die an dem Rotor (2) angebracht ist, gepresst wird.

5. Rotorarretierverfahren nach Anspruch 1, wobei
   die Stromerzeugungsvorrichtung vom Typ erneuerbare Energie ferner einen Winkelpositionsdetektor (29) zum Detektieren einer Winkelposition des Rotors (2) umfasst und
   bei dem Schritt des Drehens des Rotors (2) das Öffnen und Schließen eines Ventils (56), das in einem Versorgungspfad zur Lieferung des unter Druck stehenden Öls zu der Hydraulikpumpe (20) auf Basis eines Detektionsergebnisses, das durch den Winkelpositionsdetektor (29) erhalten wird, so gesteuert wird, dass der Rotor (2) in die Zielwinkelposition gedreht wird.

6. Rotorarretierverfahren nach Anspruch 1, wobei
   die Stromerzeugungsvorrichtung vom Typ erneuerbare Energie ferner eine Hochdrucköilleitung (54) zur Lieferung des Betriebsöls von der Hydraulikpumpe (20) zu dem Hydraulikmotor (22) und eine Niederdrucköilleitung (26) zur Rückführung des Betriebsöls von dem Hydraulikmotor (22) zu der Hydraulikpumpe (20) umfasst,
   die Hydraulikpumpe (20)
   einen Zylinder (50),
   einen Kolben (52A), der als Reaktion auf die Drehung des Rotors (2) in dem Zylinder gleiten kann,
   eine Hydraulikkammer (53), die durch den Zylinder (50) und den Kolben (52A) gebildet ist,
   ein Hochdruckventil (56) zum Öffnen und Schließen eines Verbindungspfads (57) zwischen der Hydraulikkammer (53) und der Hochdruckleitung (24), und
   ein Niederdruckventil (58) zum Öffnen und Schließen eines Verbindungspfads (59) zwischen der Hydraulikkammer (50) und der Niederdrucköilleitung (26) umfasst, und
   das Rotorarretierverfahren ferner den folgenden Schritt umfasst:

EP 2 759 700 B1

nach dem Schritt des Anhaltens des Rotors (2) und vor dem Schritt des Arretierens des Rotors (2), vorübergehendes Arretieren des Rotors (2) durch Beibehalten eines derartigen Zustands, dass das Hochdruckventil (56) und das Niederdruckventil (58) geschlossen sind.

7.  Rotorarretierverfahren nach Anspruch 1, wobei
bei dem Schritt des Anhaltens des Rotors (2) das Drehmoment der Hydraulikpumpe (20) auf einen Drehmomentanforderungswert gemäß einer Umdrehungsgeschwindigkeit des Rotors (2) reguliert wird, und ein Neigungswinkel des Blatts (2A) zu einer Fahnenstellung verändert wird, um zusätzlich zu der Bremskraft, die durch die Hydraulikpumpe (20) ausgeübt wird, eine Atmosphärenbremskraft auf den Rotor (2) auszuüben.

8.  Rotorarretierverfahren nach Anspruch 1, wobei
die Stromerzeugungsvorrichtung vom Typ erneuerbare Energie ferner einen Trennschalter (26) zur Veränderung eines Anschlusszustands zwischen dem Generator (6) und einem Stromnetz umfasst und
das Rotorarretierverfahren ferner die folgenden Schritte umfasst:

Trennen des Generators (6) von dem Stromnetz durch Öffnen des Trennschalters (26), wenn der Ausgang des Generators (6) beim Anhalten des Rotors (2) nicht größer als ein Schwellenwert wird, und
unmittelbar von dem Schritt des Abtrennens des Generators (6), Versetzen des Hydraulikmotors (20) in einen Leerlauf.

9.  Rotorarretierverfahren nach Anspruch 1, wobei
die Stromerzeugungsvorrichtung vom Typ erneuerbare Energie ferner eine Hochdruckölleitung (24) zur Lieferung des Betriebsöls von der Hydraulikpumpe (20) zu dem Hydraulikmotor (22) umfasst,
ein Speicher (48; 60) an die Hochdruckölleitung (24) angeschlossen ist, und
bei dem Schritt des Anhaltens des Rotors (2) wenigstens die Verdrängung der Hydraulikpumpe (20) erhöht wird, um in dem Speicher (60) überschüssiges Betriebsöl, das in der Hochdruckölleitung (24) überschüssig ist, zurückzubehalten.

10.  Rotorarretierverfahren nach Anspruch 4, wobei
die Stromerzeugungsvorrichtung vom Typ erneuerbare Energie ferner eine Hochdruckölleitung (24) zur Lieferung des Betriebsöls von der Hydraulikpumpe (20) zu dem Hydraulikmotor (22) umfasst, und
bei dem Schritt des Anhaltens des Rotors (2) wenigstens die Verdrängung der Hydraulikpumpe (20) erhöht wird und die Verdrängung des Hydraulikmotors (22) vorübergehend erhöht wird, um überschüssiges Betriebsöl in der Hochdruckölleitung (24) durch den Hydraulikmotor (22) zu absorbieren.

11.  Rotorarretierverfahren nach Anspruch 1, wobei
die Stromerzeugungsvorrichtung vom Typ erneuerbare Energie ferner eine Hochdruckölleitung (24) zur Lieferung des Betriebsöls von der Hydraulikpumpe (20) zu dem Hydraulikmotor (22), eine Niederdruckölleitung (26) zur Rückführung des Betriebsöls von dem Hydraulikmotor (22) zu der Hydraulikpumpe (20), einen Umgehungsfließweg (70), der an die Hochdruckölleitung (24) und die Niederdruckölleitung (26) angeschlossen ist, um den Hydraulikmotor (22) zu umgehen, und ein Entlastungsventil (72), das in dem Umgehungsfließweg bereitgestellt ist, umfasst, und
bei dem Schritt des Anhaltens des Rotors (2) wenigstens die Verdrängung der Hydraulikpumpe (20) erhöht wird, um zu verursachen, dass überschüssiges Betriebsöl in der Hochdruckölleitung (24) über den Umgehungsfließweg (70) und das Entlastungsventil (72) zu der Niederdruckölleitung (26) abgegeben wird.

12.  Rotorarretierverfahren nach Anspruch 1, ferner umfassend den folgenden Schritt:

Liefern eines Rotoranhaltebefehls von einem entfernten Ort zu der Stromerzeugungsvorrichtung vom Typ erneuerbare Energie,
wobei der Schritt des Anhaltens des Rotors auf Basis des Rotoranhaltebefehls automatisch durchgeführt wird.

13.  Rotorarretierverfahren nach Anspruch 1, wobei
die Stromerzeugungsvorrichtung vom Typ erneuerbare Energie ein Windturbinengenerator ist, der so ausgebildet ist, dass der Rotor (2) durch Wind als einer Form von erneuerbarer Energie gedreht wird, das Drehmoment des Rotors (2) über die Hydraulikpumpe (20) und den Hydraulikmotor (22) in den Generator (6) eingebracht wird, und in dem Generator (6) elektrischer Strom erzeugt wird.

14.  Stromerzeugungsvorrichtung vom Typ erneuerbare Energie, umfassend:

einen Rotor (2), der ein Blatt (2A), eine Nabe (2B), an der das Blatt (2A) angebracht ist, und eine Hauptwelle (2C), die mit der Nabe (2B) verbunden ist, umfasst,

eine Hydraulikpumpe (20), die dazu ausgebildet ist, durch eine Drehung des Rotors (2) angetrieben zu werden,

einen Hydraulikmotor (22), der dazu ausgebildet ist, durch Betriebsöl, das durch die Hydraulikpumpe (20) mit Druck beaufschlagt wird, angetrieben zu werden, und

einen Generator (6), der mit dem Hydraulikmotor (22) verbunden ist,

wobei die Stromerzeugungsvorrichtung ferner umfasst:

eine Rotoranhaltesteuereinheit (30), um den Rotor (2) durch Ausüben einer Bremskraft durch wenigstens die Hydraulikpumpe (20) auf den Rotor (2) anzuhalten, und

eine Arretiervorrichtung (9), um den Rotor (2) derart zu arretieren, dass der Rotor (2) in einer Umdrehungsrichtung unbeweglich gemacht wird,

einen Winkelpositionsdetektor (29), um eine Winkelposition des Rotors (2) zu detektieren,

eine Ölquelle (46), um unter Druck stehendes Öl zu der Hydraulikpumpe (20) zu liefern,

ein Ventil (56), das in einem Versorgungspfad zur Lieferung des unter Druck stehenden Öls von der Ölquelle (46) zu der Hydraulikpumpe (20) bereitgestellt ist, und

eine Ventilsteuerung (39), um das Öffnen und Schließen des Ventils (93) auf Basis eines Detektionsergebnisses, das durch den Winkelpositionsdetektor (29) erhalten wird, so zu steuern, dass die Hydraulikpumpe (20) durch das unter Druck stehende Öl von der Ölquelle (24) angetrieben wird und der Motor (2) in eine Zielwinkelposition gedreht wird,

wobei die Rotoranhaltesteuereinheit (30) das Drehmoment der Hydraulikpumpe (20) verändert, um die Bremskraft zu verändern.

**15.** Stromerzeugungsvorrichtung vom Typ erneuerbare Energie nach Anspruch 14, ferner umfassend:

einen Winkelpositionsdetektor (29) zum Detektieren einer Winkelposition des Rotors (2),

wobei die Rotoranhaltesteuereinheit (30) dazu ausgebildet ist, das Drehmoment der Hydraulikpumpe (20) auf Basis eines Detektionsergebnisses, das durch den Winkelpositionsdetektor (29) erhalten wird, so zu regulieren, dass der Rotor (2) an einer Zielwinkelposition angehalten wird.

**16.** Stromerzeugungsvorrichtung vom Typ erneuerbare Energie nach Anspruch 14, ferner umfassend:

eine Hochdrucköllleitung (24) zur Lieferung des Betriebsöls von der Hydraulikpumpe (20) zu dem Hydraulikmotor (22), und

eine Niederdrucköllleitung (26) zur Rückführung des Betriebsöls von dem Hydraulikmotor (22) zu der Hydraulikpumpe (20),

wobei die Hydraulikpumpe (20) umfasst:

einen Zylinder (50),

einen Kolben (52A), der als Reaktion auf die Drehung des Rotors (2) in dem Zylinder (50) gleiten kann,

eine Hydraulikkammer (53), die durch den Zylinder (50) und den Kolben (52A) gebildet ist,

ein Hochdruckventil (56) zum Öffnen und Schließen eines Verbindungspfads (57) zwischen der Hydraulikkammer (53) und der Hochdruckleitung (24),

ein Niederdruckventil (58) zum Öffnen und Schließen eines Verbindungspfads (59) zwischen der Hydraulikkammer (53) und der Niederdrucköllleitung (26), und

ein Gehäuse (90) zur Aufnahme des Zylinders (50), des Kolbens (52A), der Hydraulikkammer (53), des Hochdruckventils (56) und des Niederdruckventils (58),

wobei der Versorgungspfad (92) das Gehäuse (90) von der Ölquelle her durchdringt und mit der Hydraulikkammer (53) in Verbindung steht, und

wobei das Ventil (93) ein Magnetventil ist, das in dem Versorgungspfad (92) für das unter Druck stehende Öl bereitgestellt ist.

**17.** Stromerzeugungsvorrichtung vom Typ erneuerbare Energie nach Anspruch 16, wobei die Hydraulikpumpe (20) ferner einen Nockenring (54) mit wellenförmigen Nocken (54A, 54B) zur Bestimmung eines hin und her laufenden Bewegungszyklus des Kolbens (52A) umfasst,

die Hydraulikpumpe (20) mehrere Gruppen aufweist, wovon jede durch wenigstens zwei der Kolben (52A) mit der gleichen Phase des hin und her laufenden Bewegungszyklus gebildet ist, und

das Ventil (93) für die wenigstens zwei der Kolben (52A), die zu der gleichen Gruppe gehören, gemeinsam bereitgestellt ist.

18. Stromerzeugungsvorrichtung vom Typ erneuerbare Energie nach Anspruch 14, wobei
die Arretiervorrichtung (9) ein Arretierstift ist, der in ein erstes Loch (10), das auf Seiten des Rotors gebildet ist, und ein zweites Loch (11), das auf Seiten eines Rumpfs zur Aufnahme der Hauptwelle (2C) gebildet ist, eingesetzt werden kann,

die Hydraulikpumpe (20) mehrere Zylinder (50), mehrere Kolben (52A), die jeweils in den mehreren Zylindern (50) gleiten können, und einen Nockenring (54), der an einem Außenumfang der Hauptwelle (2C) bereitgestellt ist und wellenförmige Nocken (54A, 54B) zur Bestimmung eines hin und her laufenden Bewegungszyklus der mehreren Kolben (52A) aufweist, umfasst, und

eine Form des Nockenrings (54) so bestimmt ist, dass das erste Loch (10) mit dem zweiten Loch (11) übereinstimmt, wenn sich wenigstens einer der Kolben (52A) an einem Fuß (54A) der Nocken des Nockenrings (54) befindet.

19. Stromerzeugungsvorrichtung vom Typ erneuerbare Energie nach Anspruch 14, wobei
die Arretiervorrichtung (9) ein Arretierstift ist, der in ein erstes Loch (10), das auf Seiten des Rotors gebildet ist, und ein zweites Loch (11), das auf Seiten eines Rumpfs zur Aufnahme der Hauptwelle (2C) gebildet ist, eingesetzt werden kann, und

die Stromerzeugungsvorrichtung vom Typ der erneuerbaren Energie ferner umfasst:

einen Winkelpositionsdetektor (29), um eine Winkelposition des Rotors (2) zu detektieren,

einen Aktuator (96), der an dem Arretierstift (9) angebracht ist,

eine Bestimmungseinheit (99), um auf Basis eines Detektionsergebnisses, das durch den Winkelpositionsdetektor (29) erhalten wird, zu bestimmen, ob das erste Loch (10) mit dem zweiten Loch (11) übereinstimmt oder nicht, und

eine Aktuatorsteuereinheit (98), um den Aktuator (96) dazu zu bringen, den Arretierstift (9) in das erste Loch (10) und das zweite Loch (11) einzusetzen, wenn bestimmt wird, dass das erste Loch (10) mit dem zweiten Loch (11) übereinstimmt.

20. Stromerzeugungsvorrichtung vom Typ erneuerbare Energie nach Anspruch 14, wobei
die Arretiervorrichtung (9) ein Arretierstift ist, der in ein erstes Loch (10), das auf Seiten des Rotors gebildet ist, und ein zweites Loch (11), das auf Seiten eines Rumpfs zur Aufnahme der Hauptwelle (2C) gebildet ist, eingesetzt werden kann, und

eine Spitzenfläche (14) des Arretierstifts (9) und eine Öffnungsendfläche (15) wenigstens eines aus dem ersten Loch (10) oder dem zweiten Loch (11), die zu einer Einsetzrichtung des Arretierstifts (9) entgegengesetzt ist, abgeschrägt sind.

## Revendications

1. Procédé de blocage de rotor pour un appareil de génération d'énergie du type à énergie renouvelable qui comporte: un rotor (2) comprenant un moyeu (2B) sur lequel une pale (2A) est montée et un arbre principal (2C) relié au moyeu (2B) ; une pompe hydraulique (20) configurée pour être entraînée par une rotation du rotor ; un moteur hydraulique (22) configuré pour être entraîné par de l'huile d'actionnement mise en pression par la pompe hydraulique (20) ; et une génératrice (6) reliée au moteur hydraulique (22), le procédé comportant les étapes consistant à :

arrêter le rotor (2) en appliquant une force de freinage sur le rotor (2) grâce à au moins la pompe hydraulique (20) ; et

après l'étape d'arrêt du rotor (2), bloquer le rotor (2) de façon à immobiliser le rotor (2) dans un sens de rotation ; et

après l'étape d'arrêt du rotor (2) et avant l'étape de blocage du rotor (2), faire tourner le rotor (2) jusqu'à une position angulaire de cible ;

selon lequel, dans l'étape d'arrêt du rotor (2), un couple de la pompe hydraulique (20) est changé de façon à ajuster la force de freinage, et selon lequel, dans l'étape de rotation du rotor (2), la pompe hydraulique (20) est entraînée par de l'huile sous pression délivrée à la pompe hydraulique (20) de façon à faire tourner le rotor (2) jusqu'à la position angulaire de cible.

2. Procédé de blocage de rotor selon la revendication 1, selon lequel
l'appareil de génération d'énergie du type à énergie renouvelable comporte en outre un détecteur de position angulaire (29) destiné à détecter une position angulaire du rotor (2), et
dans l'étape d'arrêt du rotor (2), le couple de la pompe hydraulique (20) est ajusté sur la base d'un résultat de détection obtenu par le détecteur de position angulaire (29) de façon à arrêter le rotor (2) dans une position angulaire de cible.

3. Procédé de blocage de rotor selon la revendication 2, selon lequel
la position angulaire de cible est une position où un premier trou (10) formé sur un côté de rotor est en correspondance avec un deuxième trou (11) formé sur un côté de nacelle destiné à recevoir l'arbre principal (2C), et
dans l'étape de blocage du rotor (2), un axe de blocage (9) est inséré dans le premier trou sur le côté de rotor et le deuxième trou sur le côté de nacelle.

4. Procédé de blocage de rotor selon la revendication 1, selon lequel
dans l'étape de blocage du rotor (2), une garniture de frein (135) est pressée contre un disque de frein (130) fixé sur le rotor (2).

5. Procédé de blocage de rotor selon la revendication 1, selon lequel
l'appareil de génération d'énergie du type à énergie renouvelable comporte en outre un détecteur de position angulaire (29) destiné à détecter une position angulaire du rotor (2), et
dans l'étape de rotation du rotor (2), l'ouverture et la fermeture d'une soupape (56) prévue dans un passage d'alimentation afin de délivrer de l'huile sous pression à la pompe hydraulique (20) sont commandées sur la base d'un résultat de détection obtenu par le détecteur de position angulaire (29) de façon à faire tourner le rotor (2) jusqu'à la position angulaire de cible.

6. Procédé de blocage de rotor selon la revendication 1, selon lequel
l'appareil de génération d'énergie du type à énergie renouvelable comporte en outre une conduite d'huile à haute pression (54) afin de délivrer de l'huile d'actionnement de la pompe hydraulique (20) au moteur hydraulique (22) et une conduite d'huile à basse pression (26) afin de renvoyer l'huile d'actionnement du moteur hydraulique (22) à la pompe hydraulique (20),
la pompe hydraulique (20) comporte:

   un cylindre (50) ;
   un piston (52A) pouvant coulisser dans le cylindre en réponse à une rotation du rotor (2) ;
   une chambre hydraulique (53) formée par le cylindre (50) et le piston (52A) ;
   une soupape à haute pression (56) destinée à ouvrir et fermer un passage de communication (57) entre la chambre hydraulique (53) et la conduite d'huile à haute pression (24) ; et
   une soupape à basse pression (58) destinée à ouvrir et fermer un passage de communication (59) entre la chambre hydraulique (50) et la conduite d'huile à basse pression (26), et
   le procédé de blocage de rotor comporte en outre une étape consistant à :

      après l'étape d'arrêt du rotor (2) et avant l'étape de blocage du rotor (2), bloquer temporairement le rotor (2) en maintenant un état tel que la soupape à haute pression (56) et la soupape à basse pression (58) sont fermées.

7. Procédé de blocage de rotor selon la revendication 1, selon lequel
dans l'étape d'arrêt du rotor (2), le couple de la pompe hydraulique (20) est ajusté à une valeur de demande de couple en fonction d'une vitesse de rotation du rotor (2) et un angle de pas de la pale (2A) est changé vers une position de drapeau de façon à appliquer une force de freinage aérodynamique sur le rotor (2) en plus de la force de freinage appliquée par la pompe hydraulique (20).

8. Procédé de blocage de rotor selon la revendication 1, selon lequel
l'appareil de génération d'énergie du type à énergie renouvelable comporte en outre un disjoncteur (25) destiné à changer un état de connexion entre la génératrice (6) et un réseau, et
le procédé de blocage de rotor comporte en outre les étapes consistant à :

quand la sortie de la génératrice (6) ne devient pas plus grande qu'une valeur de seuil lors de l'arrêt du rotor (2), déconnecter la génératrice (6) du réseau en ouvrant le disjoncteur (25) ; et

immédiatement avant l'étape de déconnexion de la génératrice (6), amener le moteur hydraulique (20) dans un état inactif.

9. Procédé de blocage de rotor selon la revendication 1, selon lequel

l'appareil de génération d'énergie du type à énergie renouvelable comporte en outre une conduite d'huile à haute pression (24) destinée à délivrer l'huile d'actionnement de la pompe hydraulique (20) au moteur hydraulique (22), un accumulateur (48 ; 60) est relié à la conduite d'huile à haute pression (24), et

dans l'étape d'arrêt du rotor (2), au moins un déplacement de la pompe hydraulique (20) est augmenté de façon à réserver dans l'accumulateur (60) de l'huile de fonctionnement en excès qui est en excès dans la conduite d'huile à haute pression (24).

10. Procédé de blocage de rotor selon la revendication 1, selon lequel

l'appareil de génération d'énergie du type à énergie renouvelable comporte en outre une conduite d'huile à haute pression (24) destinée à délivrer de l'huile d'actionnement de la pompe hydraulique (20) au moteur hydraulique (22), et

dans l'étape d'arrêt du rotor (2), au moins un déplacement de la pompe hydraulique (20) est augmenté, et un déplacement du moteur hydraulique (22) est temporairement augmenté de façon à absorber de l'huile d'actionnement en excès dans la conduite d'huile à haute pression (24) au moyen du moteur hydraulique (22).

11. Procédé de blocage de rotor selon la revendication 1, selon lequel

l'appareil de génération d'énergie du type à énergie renouvelable comporte en outre une conduite d'huile à haute pression (24) destinée à délivrer de l'huile d'actionnement de la pompe hydraulique (20) au moteur hydraulique (22), une conduite d'huile à basse pression (26) destinée à renvoyer l'huile d'actionnement du moteur hydraulique (22) à la pompe hydraulique (20), un passage d'écoulement de dérivation (70) relié à la conduite d'huile à haute pression (24) et à la conduite d'huile à basse pression (26) afin de contourner le moteur hydraulique (22), et une soupape de décharge (72) prévue dans le passage d'écoulement de dérivation, et

dans l'étape d'arrêt du rotor (2), au moins un déplacement de la pompe hydraulique (20) est augmenté de façon à amener de l'huile d'actionnement en excès dans la conduite d'huile à haute pression (24) à être libérée vers la conduite d'huile à basse pression (26) par l'intermédiaire du passage d'écoulement de dérivation (70) et de la soupape de décharge (72).

12. Procédé de blocage de rotor selon la revendication 1, comportant en outre une étape consistant à :

délivrer une commande d'arrêt de rotor à l'appareil de génération d'énergie du type à énergie renouvelable depuis un site distant,

selon lequel l'étape d'arrêt du rotor est exécutée automatiquement sur la base de la commande d'arrêt de rotor.

13. Procédé de blocage de rotor selon la revendication 1, selon lequel

l'appareil de génération d'énergie du type à énergie renouvelable est une éolienne configurée de telle sorte que le rotor (2) est entraîné en rotation par le vent sous forme d'énergie renouvelable, un couple du rotor (2) est entré dans la génératrice (6) par l'intermédiaire de la pompe hydraulique (20) et du moteur hydraulique (22) et de l'énergie électrique est générée dans la génératrice (6).

14. Appareil de génération d'énergie du type à énergie renouvelable, comportant:

un rotor (2) comprenant une pale (2A), un moyeu (2B) sur lequel la pale (2A) est montée et un arbre principal (2C) relié au moyeu (2B) ;

une pompe hydraulique (20) configurée pour être entraînée par une rotation du rotor (2) ;

un moteur hydraulique (22) configuré pour être entraîné par de l'huile d'actionnement mise en pression par la pompe hydraulique (22) ;

une génératrice (6) reliée au moteur hydraulique (22) ;

l'appareil de génération d'énergie comportant en outre :

une unité de commande d'arrêt de rotor (30) destinée à arrêter le rotor (2) en appliquant sur le rotor (2) une force de freinage grâce à au moins la pompe hydraulique (20) ; et

un dispositif de blocage (9) destiné à bloquer le rotor (2) de façon à immobiliser le rotor (2) dans un sens de rotation ;

un détecteur de position angulaire (29) destiné à détecter une position angulaire du rotor (2) ;

une source d'huile (46) destinée à délivrer de l'huile sous pression à la pompe hydraulique (20) ;

une soupape (56) prévue dans un passage d'alimentation par l'intermédiaire duquel l'huile sous pression est délivrée à la pompe hydraulique (20) à partir de la source d'huile (46) ; et

un dispositif de commande de soupape (39) destiné à commander une ouverture et une fermeture de la soupape (93) sur la base d'un résultat de détection obtenu par le détecteur de position angulaire (29) de façon à entraîner la pompe hydraulique (20) grâce à l'huile sous pression provenant de la source d'huile (24) et faire tourner le rotor (2) jusqu'à une position angulaire de cible,

dans lequel l'unité de commande d'arrêt de rotor (30) change un couple de la pompe hydraulique (20) afin de changer la force de freinage.

15. Appareil de génération d'énergie du type à énergie renouvelable selon la revendication 14, comportant en outre:

un détecteur de position angulaire (29) destiné à détecter une position angulaire du rotor (2),

dans lequel l'unité de commande d'arrêt de rotor (30) est configurée pour ajuster le couple de la pompe hydraulique (20) sur la base d'un résultat de détection obtenu par le détecteur de position angulaire (29) de façon à arrêter le rotor (2) dans une position angulaire de cible.

16. Appareil de génération d'énergie du type à énergie renouvelable selon la revendication 14, comportant en outre:

une conduite d'huile à haute pression (24) destinée à délivrer l'huile d'actionnement de la pompe hydraulique (20) au moteur hydraulique (22) ; et

une conduite d'huile à basse pression (26) destinée à renvoyer l'huile d'actionnement du moteur hydraulique (22) à la pompe hydraulique (20),

dans lequel la pompe hydraulique (20) comporte:

un cylindre (50) ;

un piston (52A) pouvant coulisser dans le cylindre (50) en réponse à la rotation du rotor (2) ;

une chambre hydraulique (53) formée par le cylindre (50) et le piston (52A) ;

une soupape à haute pression (56) destinée à ouvrir et fermer un passage de communication (57) entre la chambre hydraulique (53) et la conduite d'huile à haute pression (24) ;

une soupape à basse pression (58) destinée à ouvrir et fermer un passage de communication (59) entre la chambre hydraulique (53) et la conduite d'huile à basse pression (26) ; et

un carter (90) destiné à renfermer le cylindre (50), le piston (52A), la chambre hydraulique (53), la soupape à haute pression (56) et la soupape à basse pression (58),

dans lequel le passage d'alimentation (92) pénètre dans le carter (90) depuis la source d'huile et communique avec la chambre hydraulique (53), et

dans lequel la soupape (93) est une électrovanne prévue dans le passage d'alimentation (92) pour l'huile sous pression.

17. Appareil de génération d'énergie du type à énergie renouvelable selon la revendication 16, dans lequel la pompe hydraulique (20) comporte en outre une came annulaire (54) ayant des lobes en forme de vague (54A, 54B) afin de déterminer un cycle de mouvement de va-et-vient du piston (52A),

la pompe hydraulique (20) a une pluralité de groupes dont chacun est formé par au moins deux des pistons (52A) ayant la même phase du cycle de mouvement de va-et-vient, et

la soupape (93) est prévue de manière commune pour les au moins deux des pistons (52A) appartenant à chacun des groupes.

18. Appareil de génération d'énergie du type à énergie renouvelable selon la revendication 14, selon lequel le dispositif de blocage (9) est un axe de blocage pouvant être inséré dans un premier trou (10) formé sur un côté de rotor et un deuxième trou (11) formé sur un côté de nacelle destiné à renfermer l'arbre principal (2C),

la pompe hydraulique (20) comporte une pluralité de cylindres (50), une pluralité de pistons (52A) pouvant coulisser dans la pluralité de cylindres (50), respectivement, et une came annulaire (54) prévue sur une circonférence extérieure de l'arbre principal (2C) et ayant des lobes en forme de vague (54A, 54B) afin de déterminer un cycle de mouvement de va-et-vient de la pluralité de pistons (52A), et

une forme de la came annulaire (54) est déterminée de telle sorte que le premier trou (10) est en correspondance avec le deuxième trou (11) quand au moins un des pistons (52A) est au niveau d'un fond (54A) des lobes de la came annulaire (54).

19. Appareil de génération d'énergie du type à énergie renouvelable selon la revendication 14, selon lequel le dispositif de blocage (9) est un axe de blocage pouvant être inséré dans un premier trou (10) formé sur un côté de rotor et un deuxième trou (11) formé sur un côté de nacelle destiné à renfermer l'arbre principal (2C), et l'appareil de génération d'énergie du type à énergie renouvelable comporte en outre:

   un détecteur de position angulaire (29) destiné à détecter une position angulaire du rotor (2) ;
   un dispositif d'entraînement (96) fixé sur l'axe de blocage (9) ;
   une unité de détermination (99) destinée à déterminer si le premier trou (10) est en correspondance ou non avec le deuxième trou (11) sur la base d'un résultat de détection obtenu par le détecteur de position angulaire (29) ; et
   une unité de commande de dispositif d'entraînement (98) destinée à amener le dispositif d'entraînement (96) à insérer l'axe de blocage (9) dans le premier trou (10) et le deuxième trou (11) lorsque l'on détermine que le premier trou (10) est en correspondance avec le deuxième trou (11).

20. Appareil de génération d'énergie du type à énergie renouvelable selon la revendication 14, selon lequel le dispositif de blocage (9) est un axe de blocage pouvant être inséré dans un premier trou (10) formé sur un côté de rotor et un deuxième trou (11) formé sur un côté de nacelle destiné à renfermer l'arbre principal (2C), et une surface d'extrémité (14) de l'axe de blocage (9) et une surface d'extrémité ouverte (15) d'au moins un du premier trou (10) ou du deuxième trou (11) à l'opposé d'une direction d'insertion de l'axe de blocage (9) sont chanfreinées.

# FIG. 1

# FIG. 2

## FIG. 3A

## FIG. 3B

## FIG. 3C

FIG. 4

# FIG. 5

PUMP CONTROLLER

# FIG. 6

START

**S1** — RECEIVE ROTOR STOP COMMAND

**S2** — OBTAIN DETECTION RESULT OF ROTOR ANGULAR POSITION

**S4** — DETERMINE TORQUE DEMAND $T_P$ OF HYDRAULIC PUMP

**S6** — OBTAIN DETECTION RESULT OF HYDRAULIC PRESSURE $P_H$

**S8** — DETERMINE DISPLACEMENT $D_P$ OF HYDRAULIC PUMP

**S10** — ADJUST NUMBER OF ACTIVE CHAMBERS IN HYDRAULIC PUMP

**S12** — IS ROTOR STOPPED? — NO

YES

END

# FIG.7

EP 2 759 700 B1

# FIG. 8

# FIG. 9

EP 2 759 700 B1

FIG. 10

```
                        ( START )
                            |
                            v
              +---------------------------+
              |      RECEIVE              |
              |  ROTOR STOP COMMAND       |----- S1
              +---------------------------+
                            |
                            v <--------------------------+
              +---------------------------+              |
              |   OBTAIN DETECTION RESULT |----- S2      |
              | OF ROTOR ANGULAR POSITION |              |
              +---------------------------+              |
                            |                            |
                            v                            |
              +---------------------------+              |
              | DETERMINE TORQUE DEMAND Tp|----- S4      |
              |    OF HYDRAULIC PUMP      |              |
              +---------------------------+              |
                            |                            |
                            v                            |
              +---------------------------+              |
              |   OBTAIN DETECTION RESULT |----- S6      |
              | OF HYDRAULIC PRESSURE PH  |              |
              +---------------------------+              |
                            |                            |
                            v                            |
              +---------------------------+              |
              | DETERMINE DISPLACEMENT Dp |----- S8      |
              |    OF HYDRAULIC PUMP      |              |
              +---------------------------+              |
                            |                            |
                            v                            |
              +---------------------------+              |
              |      ADJUST NUMBER        |----- S10     |
              |   OF ACTIVE CHAMBERS      |              |
              |    IN HYDRAULIC PUMP      |              |
              +---------------------------+              |
                            |          S12               |
                            v                     NO     |
                     < IS ROTOR STOPPED? >----------------+
                            |
                            | YES
                            v
              +---------------------------+
    S18       |   OBTAIN DETECTION RESULT |----- S14
     |        | OF ROTOR ANGULAR POSITION |
     v        +---------------------------+
+----------------+          |
| DRIVE HYDRAULIC|          v          S16
| PUMP           |       IS
| BY PRESSURIZED |<---< ROTOR STOPPED
| OIL            | NO  AT TARGET ANGULAR >
+----------------+       POSITION?
                            |
                            | YES
                            v
                        ( END )
```

## FIG. 11

EP 2 759 700 B1

FIG. 12

FIG. 13

# FIG. 14

FIG. 15

```
                    ┌─────────────┐
                    │    START    │
                    └──────┬──────┘
                           │
                    ┌──────▼──────────────┐
                    │    RECEIVE          │──── S1
                    │ ROTOR STOP COMMAND  │
                    └──────┬──────────────┘
                           │
                    ┌──────▼──────────────┐
                    │ OBTAIN DETECTION    │──── S2
                    │ RESULT OF ROTOR     │
                    │ ANGULAR POSITION    │
                    └──────┬──────────────┘
                           │
                    ┌──────▼──────────────┐
                    │ DETERMINE TORQUE    │──── S4
                    │ DEMAND $T_P$        │
                    │ OF HYDRAULIC PUMP   │
                    └──────┬──────────────┘
                           │
                    ┌──────▼──────────────┐
                    │ OBTAIN DETECTION    │──── S6
                    │ RESULT OF HYDRAULIC │
                    │ PRESSURE $P_H$      │
                    └──────┬──────────────┘
                           │
                    ┌──────▼──────────────┐
                    │ DETERMINE           │──── S8
                    │ DISPLACEMENT $D_P$  │
                    │ OF HYDRAULIC PUMP   │
                    └──────┬──────────────┘
                           │
                    ┌──────▼──────────────┐
                    │ ADJUST NUMBER       │──── S10
                    │ OF ACTIVE CHAMBERS  │
                    │ IN HYDRAULIC PUMP   │
                    └──────┬──────────────┘
```

S12

IS ROTOR STOPPED? — NO

YES

OBTAIN DETECTION RESULT OF ROTOR ANGULAR POSITION —— S20

S24

ROTATE ROTOR BY GEARED MOTOR OR PITCH DRIVE SYSTEM

S22

IS ROTOR STOPPED AT TARGET ANGULAR POSITION?

NO

YES

END

## FIG. 16

ROTARY ENCODER — 29

DETERMINATION UNIT — 99

ACTUATOR CONTROL UNIT — 98

96

9
15
10
11
2B
8A
14

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2072814 A
- US 7397145 B
- US 20110187107 A
- US 20100032959 A
- US 20100040470 A